(19) 

Europäisches
Patentamt
European
Patent Office
Office européen
des brevets

(11) **EP 4 787 452 A1**

(12) **EUROPEAN PATENT APPLICATION**
published in accordance with Art. 153(4) EPC

(43) Date of publication:
05.08.2026 Bulletin 2026/32

(21) Application number: 24871999.9

(22) Date of filing: 18.09.2024

(51) International Patent Classification (IPC):
*H01M 4/133* (2010.01)    *H01M 4/13* (2010.01)
*H01M 4/139* (2010.01)    *H01M 4/38* (2006.01)
*H01M 4/48* (2010.01)    *H01M 4/587* (2010.01)

(52) Cooperative Patent Classification (CPC):
**H01M 4/13; H01M 4/133; H01M 4/139; H01M 4/38;**
**H01M 4/48; H01M 4/587; Y02E 60/10**

(86) International application number:
**PCT/JP2024/033278**

(87) International publication number:
**WO 2025/070207 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **29.09.2023 JP 2023170736**

(71) Applicant: **Zeon Corporation**
**Tokyo 100-8246 (JP)**

(72) Inventor: **FUJII, Tsutomu**
**Tokyo 100-8246 (JP)**

(74) Representative: **Maiwald GmbH**
**Elisenhof**
**Elisenstraße 3**
**80335 München (DE)**

(54) **ELECTRODE FOR LITHIUM ION SECONDARY BATTERY, METHOD FOR PRODUCING SAME, AND LITHIUM ION SECONDARY BATTERY**

(57)    An electrode for a lithium ion secondary battery, comprising a current collector, a plurality of intermediate portions that are disposed on the current collector in an island shape and contain a first binding material, and a mixture layer disposed on the current collector and the plurality of intermediate portions, wherein an average distance between peripheral edges of the intermediate portions adjacent to each other as viewed in a thickness direction of the electrode is 30 $\mu$m or more and 250 $\mu$m or less, and an area S of each of the intermediate portions is 5,000 $\mu$m$^2$ or more and 150,000 $\mu$m$^2$ or less; and the mixture layer contains graphite and a second binding material, and the graphite has a ratio of a peak intensity corresponding to a (110) plane relative to a peak intensity corresponding to a (002) plane in an X-ray diffraction pattern of 0.0040 or more.

FIG.1

EP 4 787 452 A1

## Description

Technical Field

The present invention relates to an electrode for a lithium ion secondary battery and a method for producing the same, and a lithium ion secondary battery.

Background Art

As an electrode of a lithium ion secondary battery, an electrode in which a mixture layer containing an active material and a binding material is disposed on a current collector has been known. As a method for producing a mixture layer, the following production methods have been known: a production method that involves applying onto a current collector a slurry in which a material containing at least an active material and a binding material is dispersed in a solvent, followed by drying; a production method including forming a layer on a current collector from composite particles containing at least an active material and a binding material and compressing the resultant molded layer; and a production method that involves compressing an amorphous kneaded product formed of a material containing at least an active material and a binding material with a calender roll a plurality of times and bonding the kneaded product to a current collector, followed by compression.

Further, an electrode including a predetermined-patterned layer of a binding material between a current collector and a mixture layer has also been known (e.g., see Patent Literatures 1 to 5).

Furthermore, an electrode containing a particulate binding material disposed so that the material is scattered between a current collector and a mixture layer has also been known (e.g., see Patent Literature 6).

Citation List

Patent Literature

Patent Literature 1: Japanese Patent Application Laid-Open No. 2016-100303 A (corresponding publication: specification of U.S. patent application publication No. 2017/279114)
Patent Literature 2: Japanese Patent Application Laid-Open No. 2014-078497 A
Patent Literature 3: Japanese Patent Application Laid-Open No. 2015-106525 A
Patent Literature 4: Japanese Patent Application Laid-Open No. 2014-199738 A
Patent Literature 5: Japanese Patent Application Laid-Open No. 2013-012393 A (corresponding publication: specification of U.S. patent application publication No. 2013/004843)
Patent Literature 6: Japanese Patent Application Laid-Open No. 2023-082849 A (corresponding publication: specification of U.S. patent application publication No. 2023/178738)

Summary of Invention

Problem to Be Solved by the Invention

An electrode including a mixture layer on a current collector tends to lack a binding material disposed between the current collector and the mixture layer, whereby the bonding strength between the current collector and the mixture layer tends to be insufficient. Therefore, a layer containing the binding material may be disposed between the current collector and the mixture layer. In particular, in the method for producing an electrode using a solid material, such as the aforementioned composite particles or the amorphous kneaded product, the bonding strength between the current collector and the mixture layer is particularly insufficient unlike an electrode produced by applying the aforementioned slurry onto the current collector and subsequently drying. Therefore, it is useful to form, across the entire surface or partially, a layer containing the binding material between the current collector and the mixture layer.

A binding material generally has electrically insulative properties. Thus, it is conceivable to partially form the layer containing the binding material between the current collector and the mixture layer to achieve electrical conduction therebetween.

However, when a layer of the binding material is disposed in a striped pattern or a grid pattern between the current collector and the mixture layer, in a manner similar to that of the technologies of Patent Literatures 1 to 5, the battery may rapidly deteriorate in the case of rapid charging of the battery, that is, in the case of high-hour rate charge. Although Patent Literatures 4 and 5 also propose that the layer of the binding material is disposed in a dotted pattern between the current collector and the mixture layer, both rapid charging performance and cycle characteristics are not simultaneously achieved in some cases.

When a small amount or a trace amount of particulate binding material is scattered between the current collector and the mixture layer, in a manner similar to that of the technology of Patent Literature 6 (Japanese Patent Application Laid-Open No. 2023-082849 A), the scattered particulate binding material may, in some cases, not be resistant to a change in volume of the mixture layer in a charge and discharge cycle. Consequently, the mixture layer may, in some cases, fail to be held on the current collector, resulting in detachment of the mixture layer from the current collector. In particular, in the case of an element having a structure in which a positive electrode and a negative electrode are layered with a separator therebetween, a pressure applied to restrain the layered structure of the element is low, and thus battery characteristics when the mixture layer is detached from the current collector tend to be significantly impaired.

Accordingly, there is a desire for an electrode for a lithium ion secondary battery that can achieve both excellent rapid charging performance and cycle characteristics in a lithium ion secondary battery; a method for producing such an electrode for a lithium ion secondary battery; and a lithium ion secondary battery that can achieve both excellent rapid charging performance and cycle characteristics.

Solution to Problem

The present inventor has intensively studied to solve the aforementioned problems.

The present inventor has presumed that a reason why the rapid charging performance of a battery tends to be low when a layer of a binding material disposed between a current collector and a mixture layer has a striped pattern or a grid pattern is as described below.

The binding material generally has electrically insulative properties as described above. When the layer of the binding material disposed between the current collector and the mixture layer has a striped pattern, it is considered that a conduction path from the current collector to the mixture layer is formed so as to avoid the layer of the binding material in a striped pattern. That is, it is considered that a conduction path of the mixture layer disposed on the layer of the binding material has difficulty being formed in the extending direction of the striped pattern. On the other hand, it is considered that the conduction path of the mixture layer disposed on the layer of the binding material is easily formed in a direction orthogonal to the extending direction of the striped pattern. Thus, when a lithium ion secondary battery having as a negative electrode an electrode including as an active material graphite in which an electric potential at which an electrochemically reversible reaction occurs is close to the oxidation-reduction potential of metal lithium is subjected to a high-hour rate electrochemical reaction, such as rapid charging, it is considered that the reaction on the electrode is uneven. Then, it is considered that the battery rapidly deteriorates by a phenomenon in which metal lithium is precipitated on the negative electrode, this phenomenon impairing the battery performance. When the layer of the binding material has a grid pattern, the conduction path has difficulty being formed in the extending direction of the grid pattern similarly to the striped pattern, and thus it is considered that the battery rapidly deteriorates, reducing the battery performance.

The present inventor has further proceeded with investigation based on the aforementioned presumption, and as a result, completed the present invention.

The present invention provides as follows.

<1> An electrode for a lithium ion secondary battery, comprising a current collector, a plurality of intermediate portions that are disposed on the current collector in an island shape and contain a first binding material, and a mixture layer disposed on the current collector and the plurality of intermediate portions, wherein

an average distance between peripheral edges of the intermediate portions adjacent to each other as viewed in a thickness direction of the electrode is 30 $\mu$m or more and 250 $\mu$m or less, and an area S of each of the intermediate portions is 5,000 $\mu$m$^2$ or more and 150,000 $\mu$m$^2$ or less; and
the mixture layer contains graphite and a second binding material, and the graphite has a ratio of a peak intensity corresponding to a (110) plane relative to a peak intensity corresponding to a (002) plane in an X-ray diffraction pattern of 0.0040 or more.

<2> The electrode for a lithium ion secondary battery according to <1>, wherein the mixture layer further contains a silicon atom-containing active material.

<3> The electrode for a lithium ion secondary battery according to <1> or <2>, being a negative electrode.

<4> A lithium ion secondary battery comprising the electrode for a lithium ion secondary battery according to <3>; and a positive electrode.

<5> The lithium ion secondary battery according to <4>, wherein a discharge capacity per unit area of a portion where the electrode for a lithium ion secondary battery, which is the negative electrode, and the positive electrode face each other, when the lithium ion secondary battery is discharged at a 10-hour rate, is 3.3 mAh/cm$^2$ or more.

<6> A method for producing an electrode for a lithium ion secondary battery,

the electrode including a current collector, a plurality of intermediate portions that are disposed on the current collector in an island shape and contain a first binding material, and a mixture layer disposed on the current collector and the plurality of intermediate portions, the mixture layer containing an active material and a second binding material; an average distance between peripheral edges of the intermediate portions adjacent to each other as viewed in a thickness direction of the electrode is 30 $\mu$m or more and 250 $\mu$m or less, and an area S of each of the intermediate portions is 5,000 $\mu$m$^2$ or more and 150,000 $\mu$m$^2$ or less, and the method comprising:

a step (1) of applying a binding material composition containing the first binding material onto the current collector in an island shape to form a first intermediate in which the intermediate portions are formed; a step (2) of supplying composite particles containing the active material and the second binding material onto the current collector and the intermediate portions of the first intermediate to form a composite particle layer; and a step (3) of pressing the composite particle layer to form the mixture layer, thereby obtaining the electrode.

Advantageous Effects of Invention

According to the present invention, an electrode for a lithium ion secondary battery that can achieve both excellent rapid charging performance and cycle characteristics in a lithium ion secondary battery; a method for producing such an electrode for a lithium ion secondary battery; and a lithium ion secondary battery that may achieve both excellent rapid charging performance and cycle characteristics can be provided.

Brief Description of Drawings

FIG.1: FIG. 1 is a schematic view of an electrode for a lithium ion secondary battery according to an embodiment A1 as viewed in the thickness direction of the electrode.
FIG.2: FIG. 2 is a schematic view of a cross section taken along line II-II of FIG. 1.
FIG.3: FIG. 3 is a schematic view for illustrating intermediate portions adjacent to an intermediate portion M1.

Description of Embodiments

Hereinafter, the present invention will be described in detail with reference to embodiments and examples. However, the present invention is not limited to the embodiments and examples described hereinafter, and may be freely modified for implementation without departing from the scope of claims of the present invention and the scope of their equivalents. Components of the following embodiments may be appropriately combined. For example, any numerical value selected from the numerical group listed as the lower limit value and any numerical value selected from the numerical group listed as the upper limit value may be appropriately combined. In the drawings, the same components are denoted by the same reference numerals, and descriptions thereof may be omitted.
In the following description, unless otherwise specified,

the term "(meth)acrylic acid" encompasses acrylic acid, methacrylic acid, and combinations thereof;
The term "(meth)acrylate" encompasses acrylates, methacrylates, and combinations thereof;
The term "(meth)acrylic acid ester" encompasses acrylic acid esters, methacrylic acid ester, and combinations thereof;
The term "(meth)acrylamide" encompasses acrylamide, methacrylamide, and combinations thereof;
The term "(meth)acryloyl" encompasses acryloyl, methacryloyl, and combinations thereof.

In the following description, the structure of a structural unit that a polymer has may be expressed by the term "monomer unit" immediately after the name of a monomer capable of forming its repeating unit by polymerization. For example, a structural unit that can be formed by polymerizing a (meth)acrylic acid ester is also referred to as a "(meth) acrylic acid ester monomer unit". However, the term "monomer unit" is not limited by a polymerization method to obtain the monomer unit, and may represent a structural unit obtained by an optional polymerization method. The structural unit may be a repeating unit.
In the following description, unless otherwise specified, the "median diameter D50" of a particle means a particle diameter at which the integrated value from the small-diameter side in the volume-based integrated particle diameter distribution measured by a laser diffraction/light scattering method becomes 50%.

In the following description, unless otherwise specified, a direction of an element being "parallel", "perpendicular", and "orthogonal" may contain errors within a range that does not impair the advantageous effect of the present invention, for example, within a range of $\pm 3°$, $\pm 2°$, or $\pm 1°$.

In the following description, unless otherwise specified, a "lithium ion secondary battery" refers to a secondary battery that uses lithium ions as a carrier for charge transfer between a positive electrode and a negative electrode.

<1. Electrode for lithium ion secondary battery>

<1.1. Summary of electrode for lithium ion secondary battery>

An electrode for a lithium ion secondary battery according to an embodiment of the present invention includes: a current collector; a plurality of intermediate portions that are disposed on the current collector in an island shape and contain a first binding material; and a mixture layer disposed on the current collector and the plurality of intermediate portions.

Further, in the electrode for a lithium ion secondary battery according to the present embodiment, the average distance between the peripheral edges of the intermediate portions adjacent to each other as viewed in the thickness direction of the electrode is 30 $\mu$m or more and 250 $\mu$m or less, and the area S of each of the intermediate portions is 5,000 $\mu$m$^2$ or more and 150,000 $\mu$m$^2$ or less.

The aforementioned mixture layer contains graphite and a second binding material, and the aforementioned graphite has a ratio of the peak intensity corresponding to a (110) plane relative to the peak intensity corresponding to a (002) plane in an X-ray diffraction pattern of 0.0040 or more.

A lithium ion secondary battery using the electrode for a lithium ion secondary battery according to the present embodiment as an electrode of the lithium ion secondary battery may achieve both excellent rapid charging performance and excellent cycle characteristics.

<1.2. Embodiment A1 of electrode>

Hereinafter, an electrode for a lithium ion secondary battery according to an embodiment A1 of the present invention will be described using the drawings.

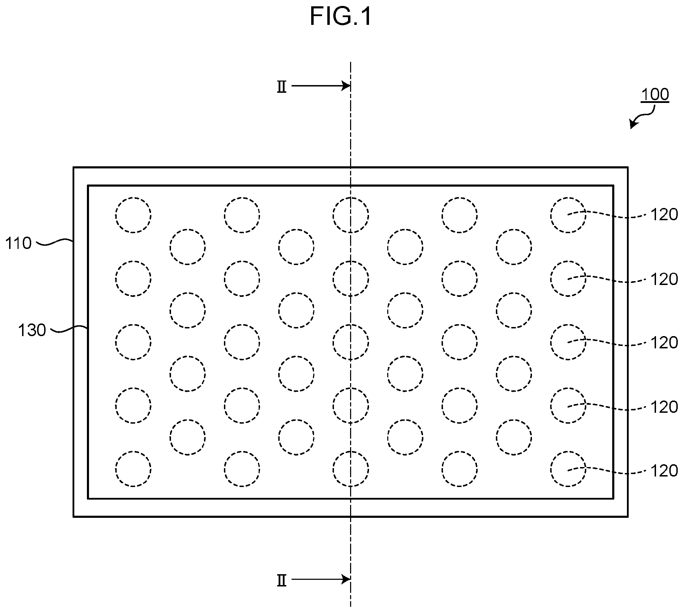

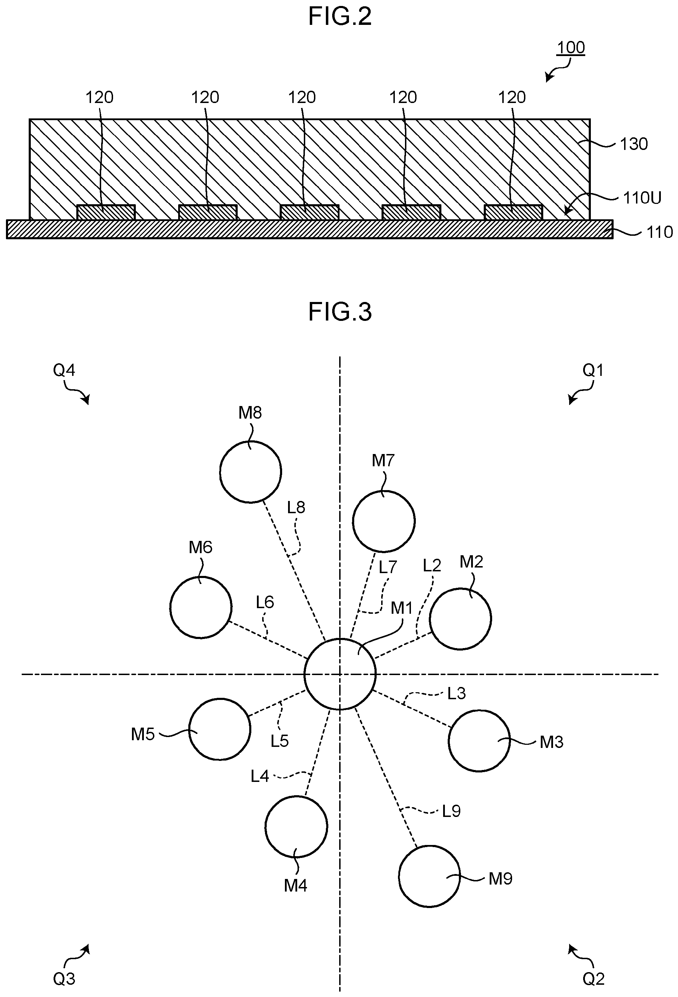

FIG. 1 is a schematic view of the electrode for a lithium ion secondary battery according to the embodiment A1 as viewed in the thickness direction of the electrode. FIG. 2 is a schematic view of a cross section taken along line II-II of FIG. 1.

As shown in FIG. 1 and FIG. 2, an electrode 100 includes a current collector 110, a plurality of intermediate portions 120, and a mixture layer 130. The electrode 100 for a lithium ion secondary battery may include a current collecting member for collecting current from the current collector 110, such as a lead or a current collecting tab, which is not shown.

Each of the plurality of intermediate portions is disposed on the current collector 110 in an island shape. Here, intermediate portions being disposed in an island shape means that a plurality of intermediate portions are provided and disposed discretely from each other. Further, the intermediate portions being disposed on the current collector means that the intermediate portions are disposed in contact with the current collector, and preferably in direct contact with the current collector.

In the present embodiment, the intermediate portions 120 and the mixture layer 130 are disposed on a surface 110U, one of the two main surfaces of the current collector 110.

In another embodiment, the intermediate portions and the mixture layer may be disposed on each of the two main surfaces of the current collector.

In the present embodiment, the intermediate portions 120 are disposed in an island shape across the entirety of the electrode. However, in still another embodiment, the intermediate portions that are not disposed in an island shape, that is, the intermediate portions that are continuously distributed, for example, in a band shape may be formed in part of the electrode, or the intermediate portions that are disposed in an island shape and in which the average distance between peripheral edges and/or the area S are outside of certain numerical ranges to be described later may be formed in part of the electrode.

A positive electrode and a negative electrode of a lithium ion secondary battery are usually disposed so as to face each other. A portion of the surface of one of the electrodes that does not face the other electrode usually does not largely contribute to a charge and discharge reaction. Therefore, in the portion of the electrode that does not face the other electrode, the intermediate portions may not be disposed in an island shape, and the intermediate portions in which the average distance between the peripheral edges and/or the area S are outside of the ranges to be described later may be disposed.

For example, the intermediate portions continuously distributed or the intermediate portions in which the average distance between the peripheral edges and/or the areas S are outside of the range to be described later may be disposed at a peripheral area of the electrode. When the intermediate portions continuously distributed are disposed at the peripheral area of the electrode, separation of the mixture layer from the peripheral area may be suppressed in a step of producing an electrode (e.g., cutting an electrode raw film). Further, even when the intermediate portions in which the average distance between the peripheral edges is less than a lower limit to be described later or the area S is more than an upper limit to be described later are disposed at the peripheral area of the electrode, separation of the mixture layer from the peripheral area may be similarly suppressed in a step of producing an electrode (e.g., cutting an electrode raw film).

It is preferable that in the portion of the surface of one of the electrodes that faces the other electrode, the intermediate portions that are disposed in an island shape and in which the average distance between the peripheral edges and the area S fall within the ranges to be described later are formed. Hereinafter, the intermediate portions that are disposed in an island shape and in which the average distance between the peripheral edges and the area S fall within the ranges to be described later are also referred to as predetermined intermediate portions.

In the portion of the surface of one of the electrodes that faces the other electrode, an intermediate portion not corresponding to the predetermined intermediate portions may be formed. When the number of the predetermined intermediate portions is defined as 100%, the ratio of the number of the intermediate portion not corresponding to the predetermined intermediate portions relative to the number of the predetermined intermediate portions is usually 15% or less, and is usually 0% or more or may be 0%.

<Intermediate portion>

The shapes of the intermediate portions as viewed in the thickness direction of the electrode are not particularly limited. Examples of the shapes of the intermediate portions may include circle; ellipse; and polygon such as triangle and tetragon(square, rectangle, and rhombus).

The shapes of the intermediate portions as viewed in the thickness direction of the electrode may be the same as, or different from, each other. Examples of the intermediate portions disposed in an island shape may include intermediate portions that have a substantially circular shape (dotted shape) and are disposed on the current collector so that the distance between the peripheral edges of the intermediate portions adjacent to each other are substantially the same or the same.

When the plurality of intermediate portions are disposed on the current collector in an island shape, the rapid charging characteristics of a battery may be improved. The present inventor presumes that the reason is as described below.

A binding material contained in the intermediate portions usually has low electroconductivity and usually acts as an insulating material, and thus the intermediate portions disposed between the current collector and the mixture layer prevent electrical conduction between the current collector and the mixture layer. Therefore, the conduction paths of the mixture layer disposed on the intermediate portions and the current collector are formed so as to avoid the intermediate portions.

When the intermediate portions have a continuous shape as viewed in the thickness direction of the electrode (e.g., a band shape or a grid shape), that is, the intermediate portions are not disposed in an island shape, it is considered that a conduction path connecting the mixture layer disposed on the intermediate portions to the portion of the current collector on which the intermediate portions are not disposed is not formed in a direction in which the intermediate portions are continuous. For example, when the intermediate portions are formed in a band shape as viewed in the thickness direction of the electrode, it is considered that the direction of the conduction path as viewed in the thickness direction of the electrode is limited to a direction other than the extending direction of the intermediate portions.

On the other hand, when the intermediate portions are disposed on the current collector in an island shape as viewed in the thickness direction of the electrode, the intermediate portions are discretely disposed on the current collector. Thus, it is considered that a specific direction in which the intermediate portions are continuous does not exist and a conduction path connecting the mixture layer disposed on the intermediate portions to the portion of the current collector on which the intermediate portions are not disposed is formed in all directions from the intermediate portions as viewed in the thickness direction of the electrode. Consequently, it is considered that an uneven reaction on the electrode may be suppressed, improving the characteristics that are exhibited during rapid charging of a battery.

The average distance between the peripheral edges of the aforementioned intermediate portions adjacent to each other as viewed in the thickness direction of the electrode is usually 30 $\mu$m or more, preferably 40 $\mu$m or more, and more preferably 50 $\mu$m or more, and is usually 250 $\mu$m or less, preferably 180 m or less, and more preferably 150 $\mu$m or less.

When the average distance between the peripheral edges is equal to or more than the aforementioned lower limit, the rapid charging characteristics and the cycle characteristics are improved. When the average distance between the peripheral edges is equal to or less than the aforementioned upper limit, the cycle characteristics are improved. Further, separation of the mixture layer from the current collector in a step of cutting and cleaving an electrode can be suppressed.

Here, the intermediate portions adjacent to any intermediate portion M1 are determined as described below. FIG. 3 is a schematic view for illustrating the intermediate portions adjacent to the intermediate portion M1. As shown in FIG. 3, distances between the peripheral edge of the intermediate portion M1 and the peripheral edges of intermediate portions M2, M3, M4, M5, M6, M7, M8, and M9 are referred to as distances L2, L3, L4, L5, L6, L7, L8, and L9, respectively. The distance L2 is shorter than the distance L7. The distance L3 is shorter than the distance L9. The distance L5 is shorter than the distance L4. The distance L6 is shorter than the distance L8.

Two straight lines orthogonal to each other at the center of the intermediate portion M1 divide a plane where the intermediate portion M1 is disposed into four quadrants Q1, Q2, Q3, and Q4. Among the intermediate portions present in the quadrant Q1 (in FIG. 3, the intermediate portions M7 and M2), the intermediate portion having the shortest distance between its peripheral edge and the peripheral edge of the intermediate portion M1 (in FIG. 3, the intermediate portion M2) is defined as being adjacent, in terms of its relationship to the intermediate portion M1. Similarly, among the intermediate portions present in the quadrant Q2 (in FIG. 3, the intermediate portions M3 and M9), an intermediate portion having the shortest distance between its peripheral edge and the peripheral edge of the intermediate portion M1 (in FIG. 3, the intermediate portion M3) is defined as being adjacent, in terms of its relationship to the intermediate portion M1. Among the intermediate portions present in the quadrant Q3 (in FIG. 3, the intermediate portions M4 and M5), an intermediate portion having the shortest distance between its peripheral edge and the peripheral edge of the intermediate portion M1 (in FIG. 3, the intermediate portion M5) is defined as being adjacent, in terms of its relationship to the intermediate portion M1. Among the intermediate portions present in the quadrant Q4 (in FIG. 3, the intermediate portions M6 and M8), an intermediate portion having the shortest distance between its peripheral edge and the peripheral edge of the intermediate portion M1 (in FIG. 3, the intermediate portion M6) is defined as being adjacent, in terms of its relationship to the intermediate portion M1. As described above, the intermediate portions M2, M3, M5, and M6 are selected for the intermediate portion M1 and defined as an intermediate portion adjacent to the intermediate portion M1. Also in Examples to be described later, an intermediate portion adjacent to an intermediate portion of interest is specified by the same method.

The plane where the intermediate portion M1 is disposed is divided into four quadrants so that any one of the quadrants includes any one of four intermediate portions (in FIG. 3, the intermediate portions M2, M3, M5, and M6) in order of increasing the distance from the peripheral edge of the intermediate portion M1.

Among the distance L2 between the peripheral edge of the intermediate portion M1 and the peripheral edge of the intermediate portion M2, the distance L3 between the peripheral edge of the intermediate portion M1 and the peripheral edge of the intermediate portion M3, the distance L5 between the peripheral edge of the intermediate portion M1 and the peripheral edge of the intermediate portion M5, and the distance L6 between the peripheral edge of the intermediate portion M1 and the peripheral edge of the intermediate portion M6, the shortest distance is referred to as distance $D_S$, and the longest distance is referred to as distance $D_L$.

The distance $D_S$ and the distance $D_L$ are determined for each of ten randomly selected intermediate portions, and the average value $D_S(ave)$ of the ten resultant distances $D_S$'s and the average value $D_L(ave)$ of the ten resultant distances $D_L$'s may be adopted as the average distance between the peripheral edges of the intermediate portions adjacent to each other.

It can be confirmed that the average distance between the peripheral edges of the intermediate portions adjacent to each other falls within the aforementioned range when both the average value $D_S(ave)$ and the average value $D_L(ave)$ fall within the aforementioned range.

The area S of each of the intermediate portions as viewed in the thickness direction of the electrode is usually 5,000 $\mu m^2$ or more, preferably more than 5,000 $\mu m^2$, more preferably 16,000 $\mu m^2$ or more, and still more preferably 20,000 $\mu m^2$ or more, and is usually 150,000 $\mu m^2$ or less, preferably 100,000 $\mu m^2$ or less, and more preferably 60,000 $\mu m^2$ or less.

When the area S is equal to or more than the aforementioned lower limit, a lithium ion secondary battery including the electrode may have high cycle characteristics. When the area S is equal to or less than the aforementioned upper limit, a lithium ion secondary battery including the electrode may have high rapid charging characteristics.

It may be confirmed that the average distance between the peripheral edges of the intermediate portions adjacent to each other and the area S of the intermediate portions each fall within the aforementioned range by specifying the outline of the intermediate portions as viewed in the thickness direction of the electrode using a sample containing the current collector and the intermediate portions and performing image analysis based on the specified outline of the intermediate portions. The sample containing the current collector and the intermediate portions can be obtained by removing the mixture layer contained in the electrode by an appropriate method while the shape, size, and positional relationship of the intermediate portions as viewed in the thickness direction of the electrode are maintained. The outline of the intermediate portions as viewed in the thickness direction of the electrode may be specified by a method in which the obtained sample containing the current collector and the intermediate portions is subjected to observation with a scanning electron microscope or elemental analysis through an energy-dispersive X-ray spectroscopy. The sample in which the shape, size, and positional relationship of the intermediate portions are maintained can be obtained by a method in which the mixture layer present at the portion of the current collector where the intermediate portions are not formed is removed by an operation of bonding an adhesive tape to the surface of the mixture layer of the electrode and then peeling the adhesive tape.

Any ten intermediate portions are selected, the areas S1 to S10 of the ten intermediate portions are measured, and the arithmetic average value of the areas S1 to S10 may be used as the area S of the intermediate portions.

The number of the intermediate portions in the electrode is not particularly limited, and may be any number according to the area of the electrode.

The number of the intermediate portions per the unit area of the electrode is, for example, 350 portions/cm$^2$ or more, and is, for example, 10,000 portions/cm$^2$ or less.

The size of the intermediate portions in a direction parallel to the thickness direction of the electrode (the thickness of the intermediate portions) is, for example, 0.6 μm or more, and is, for example, 5 μm or less.

(First binding material)

The intermediate portions usually contain a binding material. Here, the binding material contained in the intermediate portions is also referred to as a first binding material for distinguishing this binding material from a binding material contained in the mixture layer to be described later.

The first binding material is a material capable of binding the mixture layer to the current collector.

The first binding material usually contains a polymer. Hereinafter, the polymer that may be contained in the first binding material is also referred to as a polymer (1). The polymer (1) may be particulate in the intermediate portions. Formation of the intermediate portions from the particulate polymer (1) may be confirmed by non-uniformity of the elastic modulus of the intermediate portions in measurement with an atomic force microscope. When the intermediate portions are formed from the particulate polymer (1), the grain boundary of the particulate polymer (1) may be observed as a change in elastic modulus.

The polymer (1) is not particularly limited, and an optional polymer may be used as the polymer (1).

When the binding material composition contains the polymer (1) and a solvent, the polymer (1) is preferably a polymer that can make the binding material composition excellent in mechanical stability; When the intermediate portion contains the polymer (1), the polymer (1) is preferably a polymer that can make the intermediate portion excellent in tackiness.

When the binding material composition is excellent in mechanical stability, the binding material composition can be stably applied onto a current collector and the productivity of the electrode is excellent.

When the intermediate portion that contains the polymer (1) is excellent in tackiness, the mixture layer can be formed at a high production speed on the current collector provided with the intermediate portions.

Tackiness may be evaluated by a ball tack test (JIS Z0237), a probe tack test or the like.

The polymer (1) is preferably chemically and electrochemically stable so as to maintain favorable battery performance when the electrode is used for a lithium ion secondary battery.

Specific examples of the polymer (1) may include a (meth)acryl-based polymer and an aromatic vinyl-conjugated diene copolymer such as a styrene-butadiene copolymer.

The (meth)acryl-based polymer means a polymer containing a (meth)acrylic acid ester monomer unit. Examples of the (meth)acrylic acid ester monomer unit may include a (meth)acrylic acid alkyl ester monomer unit.

In an embodiment, the polymer (1) is preferably a (meth)acryl-based polymer.

When the polymer (1) is a (meth)acryl-based polymer, the polymer (1) preferably contains a (meth)acrylic acid alkyl ester monomer unit. In this specification, the alkyl bonded to the non-carbonyl oxygen atom of the (meth)acrylic acid alkyl ester may be any of a linear alkyl, a branched alkyl, and a cyclic alkyl. The (meth)acrylic acid alkyl ester monomer unit represents a structural unit having a structure formed by polymerizing a (meth)acrylic acid alkyl ester monomer. The (meth) acrylic acid alkyl ester monomer encompasses an acrylic acid alkyl ester monomer, a methacrylic acid alkyl ester monomer, and combinations thereof. Examples of the (meth)acrylic acid alkyl ester monomer may include an acrylic acid alkyl ester monomer such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, cyclohexyl acrylate, and isobornyl acrylate; and a methacrylic acid alkyl ester monomer such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, cyclohexyl methacrylate, and isobornyl methacrylate. Among these, a (meth)acrylic acid alkyl ester monomer in which an alkyl group bonded to a non-carbonyl oxygen atom has 4 or more carbon atoms is preferable, and a (meth)acrylic acid alkyl ester monomer in which an alkyl group bonded to a non-carbonyl oxygen atom has 6 or more and 20 or less carbon atoms is more preferable. As the (meth)acrylic acid alkyl ester monomer units, one type thereof may be solely contained in the polymer (1), and two or more types thereof may also be contained in combination.

The ratio of the (meth)acrylic acid alkyl ester monomer unit in the polymer (1) is preferably 35% by weight or more, more preferably 45% by weight or more, and still more preferably 55% by weight or more, and is preferably 80% by weight or less, more preferably 75% by weight or less, and still more preferably 70% by weight or less. The ratio of the (meth) acrylic acid alkyl ester monomer unit in the polymer (1) usually corresponds to the weight ratio of the (meth)acrylic acid alkyl ester monomer relative to the total weight of the monomers used in the production of the polymer (1) (charge ratio of the (meth)acrylic acid alkyl ester monomer).

The polymer (1) preferably contains an aromatic monovinyl monomer unit. The aromatic monovinyl monomer unit represents a structural unit having a structure formed by polymerizing an aromatic monovinyl monomer. Examples of the aromatic monovinyl monomer may include styrene, α-methylstyrene, and vinyltoluene. Among these, styrene is preferable. As the aromatic monovinyl monomer units, one type thereof may be solely contained in the polymer (1), and two or more types thereof may also be contained in combination.

The ratio of the aromatic monovinyl monomer unit in the polymer (1) is preferably 20% by weight or more, more preferably 25% by weight or more, and still more preferably 27% by weight or more, and is preferably 50% by weight or less, and more preferably 55% by weight or less. The ratio of the aromatic monovinyl monomer unit in the polymer (1) usually corresponds to the weight ratio of the aromatic monovinyl monomer relative to the total weight of the monomers used in the production of the polymer (1) (charge ratio of the aromatic monovinyl monomer).

The polymer (1) may contain a crosslinkable monomer unit from the viewpoint of reducing swelling of the intermediate portions in the presence of an electrolytic solution and enhancing the cycle characteristics of the battery. The crosslinkable monomer unit represents a structural unit having a structure formed by polymerizing a crosslinkable monomer. The crosslinkable monomer refers to a monomer capable of forming a crosslinked structure when polymerized. Examples of the crosslinkable monomer may include a monomer having two or more reactive groups per molecule.

As the crosslinkable monomer units, one type thereof may be solely contained in the polymer (1), and two or more types thereof may also be contained in combination.

When the polymer (1) contains a crosslinkable monomer unit, the ratio of the crosslinkable monomer unit is preferably 0.1% by weight or more, more preferably 0.2% by weight or more, and still more preferably 0.5% by weight or more, and is preferably 10% by weight or less, more preferably 7% by weight or less, and still more preferably 6% by weight or less from the viewpoint of improving the tackiness of the intermediate portions. The ratio of the crosslinkable monomer unit in the polymer (1) usually corresponds to the weight ratio of the crosslinkable monomer relative to the total weight of the monomers used in the production of the polymer (1) (charge ratio of the crosslinkable monomer).

Examples of the reactive groups possessed by the crosslinkable monomer may include an epoxy group, an N-methylol group, an oxetanyl group, an oxazoline group, an ethylenically unsaturated bond group, and combinations thereof. Among these, an epoxy group, an N-methylol group, and an ethylenically unsaturated bond group are preferable.

Specific examples of the crosslinkable monomer may include an epoxy/N-methylol group-containing crosslinkable monomer having at least one of an epoxy group and an N-methylol group and having one or two or more ethylenically unsaturated bonds; and a polyvalent ethylenically unsaturated crosslinkable monomer having neither an epoxy group nor an N-methylol group and having two or more ethylenically unsaturated bonds.

Examples of the epoxy/N-methylol group-containing crosslinkable monomers having at least one of an epoxy group and an N-methylol group and having one or two or more ethylenically unsaturated bonds may include an unsaturated glycidyl ether such as vinyl glycidyl ether, allyl glycidyl ether, butenyl glycidyl ether, and o-allyl phenyl glycidyl ether; a diene or polyene monoepoxide such as butadiene monoepoxide, chloroprene monoepoxide, 4,5-epoxy-2-pentene, 3,4-epoxy-1-vinylcyclohexene, and 1,2-epoxy-5,9-cyclododecadiene; an alkenyl epoxide such as 3,4-epoxy-1-butene, 1,2-epoxy-5-hexene, and 1,2-epoxy-9-decene; an unsaturated carboxylic acid glycidyl ester such as glycidyl acrylate, glycidyl methacrylate, glycidyl crotonate, glycidyl-4-heptenoate, glycidyl sorbate, glycidyl linolate, glycidyl-4-methyl-3-pentenoate, 3-cyclohexenecarboxylic acid glycidyl ester, and 4-methyl-3-cyclohexenecarboxylic acid glycidyl ester; and an N-methylol-substituted (meth)acrylamide such as N-methylol (meth)acrylamide and N,N'-dimethylol (meth) acrylamide. Among these, allyl glycidyl ether, N-methylol (meth)acrylamide, and glycidyl (meth)acrylate are preferable. Allyl glycidyl ether and N-methylol acrylamide are more preferable, and allyl glycidyl ether is still more preferable.

When the polymer (1) contains the aforementioned epoxy/N-methylol group-containing crosslinkable monomer unit, the ratio of the epoxy/N-methylol group-containing crosslinkable monomer unit is preferably 0.1% by weight or more, more preferably 0.2% by weight or more, and still more preferably 0.5% by weight or more, and is preferably 5% by weight or less, more preferably 4% by weight or less, and still more preferably 3% by weight or less from the viewpoint of improving the tackiness of the intermediate portions. The epoxy/N-methylol group-containing crosslinkable monomer unit represents a structural unit having a structure formed by polymerizing an epoxy/N-methylol group-containing crosslinkable monomer. The ratio of the epoxy/N-methylol group-containing crosslinkable monomer unit in the polymer (1) usually corresponds to the weight ratio of the epoxy/N-methylol group-containing crosslinkable monomer relative to the total weight of the monomers used in the production of the polymer (1) (charge ratio of the epoxy/N-methylol group-containing crosslinkable monomer unit).

Examples of the polyvalent ethylenically unsaturated crosslinkable monomers having two or more ethylenically unsaturated bonds may include allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, trimethylolpropane-tri(meth)acrylate, dipropylene glycol diallyl ether, polyglycol diallyl ether, triethylene glycol divinyl ether, hydroquinone diallyl ether, tetraallyloxyethane, trimethylolpropane-diallyl ether, allyl or vinyl ethers of other polyfunctional alcohols, triallylamine, methylenebisacrylamide, and divinylbenzene. Among these, ethylene glycol di(meth)acrylate and allyl (meth)acrylate are preferable, and allyl (meth)acrylate is more preferable.

When the polymer (1) contains the aforementioned polyvalent ethylenically unsaturated crosslinkable monomer unit, the ratio of the polyvalent ethylenically unsaturated crosslinkable monomer unit is preferably 0.1% by weight or more, more preferably 0.2% by weight or more, and still more preferably 0.5% by weight or more, and is preferably 10% by weight or less, more preferably 8% by weight or less, and still more preferably 5% by weight or less from the viewpoint of improving the tackiness of the intermediate portion. The polyvalent ethylenically unsaturated crosslinkable monomer unit represents a structural unit having a structure formed by polymerizing a polyvalent ethylenically unsaturated crosslinkable monomer. The ratio of the polyvalent ethylenically unsaturated crosslinkable monomer unit in the polymer (1) usually corresponds to the weight ratio of the polyvalent ethylenically unsaturated crosslinkable monomer relative to the total weight of the monomers used in the production of the polymer (1) (charge ratio of the polyvalent ethylenically unsaturated crosslinkable monomer).

The polymer (1) preferably contains an acid group-containing monomer unit in order to enhance the mechanical stability of the binding material composition containing the polymer (1) and a solvent and to provide the intermediate portions more stably on the current collector. Examples of the acid group-containing monomer capable of forming the acid group-containing monomer unit may include a monomer having a carboxylic acid group, a monomer having a sulfo group, and a monomer having a phosphate group.

Examples of the monomer having a carboxylic acid group may include a monocarboxylic acid, and a dicarboxylic acid. Examples of the monocarboxylic acid may include acrylic acid, methacrylic acid, and crotonic acid. Examples of the dicarboxylic acid may include maleic acid, fumaric acid, and itaconic acid.

Examples of the monomer having a sulfo group may include vinylsulfonic acid, methylvinylsulfonic acid, (meth)allylsulfonic acid, (meth)acrylic acid 2-sulfoethyl ester, 2-acrylamide -2 methylpropanesulfonic acid, 3-allyloxy-2-hydroxypropanesulfonic acid, and p-styrenesulfonic acid.

In this specification, the term "(meth)allyl" means allyl and/or methallyl.

Further, examples of the monomers having a phosphate group may include 2-(meth)acryloyloxyethyl phosphate, methyl-2-(meth)acryloyloxyethyl phosphate, and ethyl-(meth)acryloyloxyethyl phosphate.

These acid group-containing monomer units may be in the form of salts in the polymer (1). When the polymer (1) is a polymer containing the acid group-containing monomer unit, some or all of the acid groups in the acid group-containing monomer unit may be in the form of anions. The polymer (1) may be, for example, an alkali metal salt such as a lithium salt, a sodium salt, or a potassium salt, or an alkaline earth metal salt such as a magnesium salt or a calcium salt.

As these acid group-containing monomers, one type thereof may be solely used, and two or more types thereof may also be used in combination at any ratio.

The ratio of the acid group-containing acid monomer unit in the polymer (1) is preferably 0.1% by weight or more, more preferably 0.5% by weight or more, and still more preferably 1% by weight or more, and is preferably 30% by weight or less, more preferably 25% by weight or less, and still more preferably 20% by weight or less. The ratio of the acid group-containing monomer unit in the polymer (1) usually corresponds to the weight ratio of the acid group-containing monomer relative to the total weight of the monomers used in the production of the polymer (1) (charge ratio of the acid group-containing monomers).

The polymer (1) may contain a hydroxy group-containing monomer unit to enhance adhesion between the intermediate portion and the current collector. The hydroxy group-containing monomer means a monomer containing a hydroxy group. Examples of the hydroxy group-containing monomer may include 2-hydroxyethyl acrylate, 2-hydroxypropyl acrylate, 2-hydroxyethyl methacrylate, 2-hydroxypropyl methacrylate and 4-hydroxybutyl acrylate.

The ratio of the hydroxy group-containing monomer unit in the polymer (1) is preferably 20% by weight or less, more preferably 15% by weight or less, and still more preferably 10% by weight or less, and is usually 0% by weight or more, may be 0% by weight, and is preferably 0.1% by weight or more, more preferably 0.5% by weight or more, and still more preferably 1% by weight or more. The ratio of the hydroxy group-containing monomer unit in the polymer (1) usually corresponds to the weight ratio of the hydroxy group-containing monomer relative to the total weight of the monomers used in the production of the polymer (1) (charge ratio of the hydroxy group-containing monomer).

The polymer (1) may contain an optional monomer unit other than the monomer units described above.

The polymer (1) may contain an $\alpha,\beta$-ethylenically unsaturated nitrile monomer unit. The $\alpha,\beta$-ethylenically unsaturated nitrile monomer unit represents a structural unit having a structure formed by polymerizing an $\alpha,\beta$-ethylenically unsaturated nitrile monomer. The $\alpha,\beta$-ethylenically unsaturated nitrile monomer means a nitrile compound having an ethylenically unsaturated bond at the $\alpha$-$\beta$ position. Examples of the $\alpha,\beta$-ethylenically unsaturated nitrile monomer may include acrylonitrile; an $\alpha$-halogenoacrylonitrile such as $\alpha$-chloroacrylonitrile and $\alpha$-bromoacrylonitrile; and an $\alpha$-alkylacrylonitrile such as methacrylonitrile. As the $\alpha,\beta$-ethylenically unsaturated nitrile monomer units, one type thereof may be solely contained in the polymer (1), and two or more types thereof may also be contained in combination.

The ratio of the $\alpha,\beta$-ethylenically unsaturated nitrile monomer unit in the polymer (1) is preferably 0% by weight or more, more preferably 1% by weight or more, and still more preferably 3% by weight or more, and is preferably 50% by weight or less, more preferably 30% by weight or less, and still more preferably 20% by weight or less. The ratio of the $\alpha,\beta$-ethylenically unsaturated nitrile monomer unit in the polymer (1) usually corresponds to the weight ratio of the $\alpha,\beta$-ethylenically unsaturated nitrile monomer relative to the total weight of the monomers used in the production of the polymer (1) (charge ratio of $\alpha,\beta$-ethylenically unsaturated nitrile monomer).

The polymer (1) may contain an ethylenically unsaturated amide monomer unit. The ethylenically unsaturated amide monomer unit represents a structural unit having a structure formed by polymerizing an ethylenically unsaturated amide monomer. Examples of the ethylenically unsaturated amide monomer may include (meth)acrylamide. As the ethylenically unsaturated amide monomer units, one type thereof may be solely contained in the polymer (1), and two or more types thereof may also be contained in combination.

The polymer (1) may be a homopolymer or a copolymer, and preferably a copolymer.

When the polymer (1) is a copolymer, the polymer (1) may be any of a block copolymer, a random polymer, and a random copolymer having a core/shell structure. When the polymer (1) has a core/shell structure, the polymer (1) can be considered as a random copolymer if the polymerization manner in at least the shell structure portion is random.

The polymer (1) being a random copolymer can be determined by confirming that the polymer (1) has a single glass transition temperature. The glass transition temperature of the polymer (1) may be measured using a differential scanning calorimeter at a measurement temperature of -100°C to 180°C and a rate of temperature increase of 5°C/min in accordance with JIS K7121.

The glass transition temperature of the polymer (1) is preferably 10°C or lower, more preferably 0°C or lower, and still more preferably -10°C or lower, from the viewpoint of enhancing the tackiness of the intermediate portions, and is usually -100°C or higher, although the lower limit is not particularly limited.

The first binding material may contain an optional component in addition to the aforementioned polymer (1). Examples of the optional component may include a surfactant, an emulsifier, a dispersion stabilizer, a polymerization initiator, a chain transfer agent, a defoaming agent, an antioxidant, a preservative, and the like, which are added at or after the polymerization of the polymer.

The weight ratio of the first binding material in the intermediate portion is preferably larger than the weight ratio of the second binding material in the mixture layer, which will be described later.

(Optional component included in the intermediate portion)

The intermediate portion may include an optional component in addition to the first binding material.

For example, the intermediate portion may include a plasticizer, which is a low molecular weight compound, in addition to the first binding material. Here, the low molecular weight compound means a compound whose molecular weight is usually 10,000 or less.

The intermediate portion that includes a plasticizer can enhance the molecular mobility of the polymer (1) and improve the tackiness of the intermediate portion. The plasticizer is preferably selected from the viewpoint of compatibility with the polymer (1). When the plasticizer is used for the intermediate portion, the weight ratio of the plasticizer is preferably 0.1 part by weight or more, more preferably 0.5 part by weight or more, and still more preferably 1 part by weight or more, and is preferably 10 parts by weight or less, and more preferably 5 parts by weight or less, relative to 100 parts by weight of the polymer (1).

The intermediate portion may include an optional reinforcing material in addition to the first binding material. The reinforcing material is a material having a function of increasing the mechanical strength of the intermediate portion. Examples of the reinforcing material may include an organic filler and an inorganic filler. Specific examples of the inorganic filler may include carbon nanotubes. Specific examples of the organic filler may include cellulose nanofibers. When the cellulose nanofibers are used in the intermediate portion, the weight ratio thereof is preferably 0.1 part by weight or more, more preferably 0.2 part by weight or more, and still more preferably 0.5 part by weight or more, and is preferably 10 parts by weight or less, and more preferably 5 parts by weight or less, relative to 100 parts by weight of the polymer (1).

When the intermediate portion is formed using a particulate binding material, it is preferable to subject the obtained electrode to a heating operation after the pressing step. By subjecting the electrode to the heating operation, a small amount of solvent existing in the grain boundary of the particulate binding material is removed, and voids in the grain boundary between the particulate binding material are reduced by plasticization, so that the mechanical strength of the intermediate portion can be enhanced. Thus, improvement in cycle characteristics as a battery can be expected.

<Current collector>

A material for the current collector is preferably a material having electroconductivity and electrochemical durability. Specific examples of the material usable for the current collector may include a metal, carbon, and an electroconductive macromolecule, and a metal is preferable. Examples of the metal may include copper, aluminum, platinum, nickel, tantalum, titanium, stainless steel, and alloys thereof. Among these, from the viewpoint of electroconductivity and voltage resistance, copper, aluminum, and an aluminum alloy are preferable. When high voltage resistance is required, high-purity aluminum disclosed in Japanese Patent Application Laid-Open No. 2001-176757 A can be preferably used. In particular, aluminum is preferably used as the material for the current collector usable in a positive electrode, and copper is preferably used as the material for the current collector usable in a negative electrode. As these materials, one type thereof may be solely used, and two or more types thereof may also be used in combination.

The current collector generally has a film shape or a sheet shape. The thickness of the current collector may be appropriately selected depending on the purposes of use, and is preferably 1 $\mu$m or more, more preferably 5 $\mu$m or more, and still more preferably 10 $\mu$m or more, and is preferably 200 $\mu$m or less, more preferably 100 $\mu$m or less, and still more preferably 50 $\mu$m or less.

<Mixture layer>

The mixture layer is disposed on the current collector and the plurality of intermediate portions. The mixture layer being disposed on the current collector and the intermediate portions means that the mixture layer is disposed in contact with part of the current collector in which the intermediate portions are not disposed and in contact with the intermediate portions. The intermediate portions are disposed between the current collector and the mixture layer.

When the mixture layer is disposed on the current collector and the intermediate portions, the mixture layer and the current collector are bonded through the intermediate portions, so that separation of the mixture layer and the current collector may be suppressed.

The mixture layer usually contains at least an active material and a binding material, and preferably contains graphite and a binding material. The mixture layer may contain a material, such as an electroconductive material. The binding material contained in the mixture layer is also referred to as a second binding material for distinguishing this binding material from the binding material contained in the intermediate portions. The second binding material is a material capable of bonding active materials that are usually particles. When graphite is used as the active material of the mixture layer, graphite may usually function as a negative electrode active material in a lithium ion secondary battery. Accordingly, the electrode for a lithium ion secondary battery of the present embodiment can function as a negative electrode.

Graphite contained in the mixture layer has a ratio (I(110)/I(002)) of the peak intensity (I(110)) corresponding to a (110) plane in the crystal structure of graphite in the X-ray diffraction pattern relative to the peak intensity (I(002)) corresponding to a (002) plane in the crystal structure of graphite in the X-ray diffraction pattern of usually 0.0040 or more, preferably 0.0050 or more, and more preferably 0.0055 or more. The upper limit thereof is not particularly limited, but is preferably 0.0150 or less, and more preferably 0.0115 or less.

The (002) plane in the crystal structure of graphite is a plane in a c-axis direction of a graphite crystal, and the (110) plane of graphite is a plane in an a-axis direction perpendicular to the (002) plane. In the measurement of the X-ray diffraction pattern of graphite, a peak attributed as the diffraction line from the (002) plane of graphite and a peak attributed as the diffraction line from the (110) plane of graphite are detected.

The ratio (I(110)/I(002)) of the peak intensity (I(110)) corresponding to the (110) plane relative to the peak intensity (I(002)) corresponding to the (002) plane is a numerical value involved in the orientation of graphite. A higher ratio (I(110)/I(002)) means a lower degree of orientation. Here, the orientation of graphite represents the degree to which the crystal plane (002) of graphite particles aligns with the plane direction of the current collector.

When the ratio (I(110)/I(002)) is equal to or more than the aforementioned lower limit, the rapid charging characteristics can be improved in a lithium ion secondary battery including the electrode. The reason is presumed as described below.

Graphite is an anisotropic material and slips easily in an in-plane direction. Thus, when a layer (mixture layer) containing graphite is subjected to a pressing operation with a roll press machine to increase the electrode density in a step of producing an electrode, graphite particles contained in the mixture layer are likely to be oriented along the plane of the current collector. When graphite is highly oriented in the in-plane direction of the current collector, the path of voids inside the mixture layer from the electrode surface to the current collector (tortuous path length) is increased. When the void structure of the electrode is in such a state, the transport (electrophoresis) of lithium ions from the surface layer of the mixture layer of the electrode to the deep portion of the mixture layer near the current collector is hindered at rapid charging. As a result, a charging reaction occurs in a concentrated manner on the electrode surface, and thus the charge capacity is reduced. In addition, it is possible that metal lithium precipitates on the electrode surface, causing irreversible capacity degradation.

In contrast, when the ratio (I(110)/I(002)) involved in orientation is equal to or more than the aforementioned lower limit, that is, the orientation of the graphite particles towards the plane of the current collector is restricted, the path of voids from the electrode surface to the deep portion of the electrode near the current collector (tortuous path length) can be shortened, and the charging performance in rapid charging can be improved.

The ratio (I(110)/I(002)) of graphite contained in the mixture layer may be adjusted by adjusting the ratio (I(110)/I(002)) of graphite used as the material for the mixture layer and production conditions of the mixture layer. For example, the mixture layer may be formed by producing composite particles containing graphite and the binding material as a powder and pressing a layer of the composite particles as this powder, and as a result, the mixture layer in which the ratio (I(110)/I(002)) of graphite falls within the aforementioned range may be formed. Graphite contained in the composite particles is present in the composite particles in a state of low degree of orientation. Thus, when the mixture layer is formed on the current collector using the graphite and a pressing step is performed, the degree of orientation can be reduced as compared with that achieved by a method in which a liquid composition containing graphite, the binding material, and a solvent is applied onto the current collector, dried, and pressed to produce the mixture layer and the electrode. Furthermore, in a conventional method for producing an electrode in which a liquid composition containing graphite, the binding material, and a solvent is applied onto the current collector, dried, and pressed, the liquid composition is simply applied and dried to orient the graphite particles on the current collector to some degree, and thus the ratio (I(110)/I(002)) of graphite falling within the aforementioned range generally cannot be achieved. Accordingly, the ratio (I(110)/I(002)) of graphite falling within the aforementioned range may indicate the formation of the mixture layer using the composite particles.

The ratio (I(110)/I(002)) of graphite can be changed, for example, by selecting a method for producing composite particles. In particular, when a spray drying method capable of forming composite particles instantaneously is selected as the method for producing composite particles, the degree of orientation of graphite in the electrode can be reduced.

The ratio (I(110)/I(002)) of graphite may be measured by the following method.

For the mixture layer, an X-ray diffraction pattern is obtained with an X-ray diffraction device. Next, the resultant X-ray diffraction pattern is compared with an X-ray diffraction pattern of known graphite to identify a peak based on the (110) plane of graphite and a peak based on the (002) plane of graphite in the X-ray diffraction pattern of the mixture layer. A peak intensity I(110) and a peak intensity I(002) of the respective peaks are obtained, and the ratio (I(110) /I(002)) may be determined.

X-ray diffraction measurement may be performed, for example, by a concentration method under conditions of a tube voltage of 45 kV, a tube current of 200 mA, a measurement angle of 20° to 90°, and a scanning speed of 20°/min.

As graphite, natural graphite, artificial graphite, or the like may be used.

The shape of graphite is not particularly limited, and scale-shaped graphite flake, flat graphite, or spheroidal graphite may be used, two or more types thereof may be used in combination, or graphite may be surface-treated, for example, by covering it with amorphous carbon.

The mixture layer may contain an optional active material in addition to graphite serving as an active material. Examples of the optional active material may include a carbonaceous material such as amorphous carbon, mesocarbon microbeads, and pitch-based carbon fibers; an electroconductive polymer such as polyacene; a metal such as silicon, tin, zinc, manganese, iron, and nickel, and alloys thereof; oxides or sulfuric acid salts of the metals or the alloys; metal lithium; a lithium alloy such as Li-Al, Li-Bi-Cd, and Li-Sn-Cd; a lithium transition metal nitride; and a silicon atom-containing active material to be described later.

The aforementioned active material may have a form of a composite material with another material, for example, a composite material in which the surface of the active material is covered with electroconductive carbon. The composite material may be prepared, for example, by attaching an electroconductive material to the surface of the particles of the active material, for example, by a mechanical modification method.

For example, the mixture layer may contain a silicon atom-containing active material from the viewpoint of increasing the capacity density of the electrode. The silicon atom-containing active material is a material that contains a silicon atom and may function as an active material (particularly a negative electrode active material) in the electrode for a lithium ion secondary battery. Examples of the silicon atom-containing active material may include silicon and an alloy containing silicon, and silicon oxide ($SiO$, $SiO_x$: $0 < x < 2$). When the mixture layer contains the silicon atom-containing active material in addition to graphite, the capacity density per unit area of the portion where a negative electrode and a positive electrode face each other in a lithium ion secondary battery is improved, and thus the energy density can be increased. The silicon atom-containing active material may have a form of a composite material of a silicon atom-containing material and another material, for example a composite material in which the surface of an active material is covered with electroconductive carbon.

In addition to graphite, as the optional active material that may be contained, one type thereof may be solely used, and two or more types thereof may also be used in combination.

When the mixture layer contains the silicon atom-containing active material in addition to graphite, the weight ratio of the silicon atom-containing active material relative to graphite in the mixture layer is preferably 1% by weight or more, more preferably 3% by weight or more, and still more preferably 5% by weight or more, and is usually 100% by weight or less, and preferably less than 100% by weight, from the viewpoint of improving the discharge capacity per unit area of the portion where a negative electrode and a positive electrode face each other in a lithium ion secondary battery.

The second binding material usually contains a polymer. A polymer that may be contained in the second binding material is also referred to as a polymer (2). The polymer (2) may be the same as, or different from, the aforementioned polymer (1). As the polymer (2), one type thereof may be used solely, and two or more types thereof may also be used in combination. The polymer (2) may be a soluble polymer that can be dissolved in a solvent, an insoluble polymer that is dispersed in an insoluble solvent, or a combination of a soluble polymer and an insoluble polymer.

The soluble polymer refers to a polymer having an insoluble content of less than 0.5% by weight when 0.5 g of the polymer is dissolved in 100 g of a solvent at 25°C.

The insoluble polymer refers to a polymer having an insoluble content of 0.5% by weight or more when 0.5 g of the polymer is dissolved in 100 g of a solvent at 25°C.

When the solvent is water, the soluble polymer and the insoluble polymer refer to a water-soluble polymer and a water-insoluble polymer, respectively. The soluble polymer may be a thickener. The thickener has a function of stably dispersing particles of the active material and the like.

Examples of the polymer (2) that may be contained in the second binding material may include a water-soluble polymer, and a combination of a water-soluble polymer and a water-insoluble polymer.

As the water-soluble polymer, a commercially available thickener may be used. Examples of the water-soluble polymer may include carboxymethyl cellulose, methyl cellulose, hydroxypropyl methylcellulose, hydroxyethyl methylcellulose, polyvinyl alcohol, polymethacrylic acid, polyacrylic acid, and a copolymer containing an acrylamide monomer unit and an acrylic acid monomer unit (e.g., an acrylic acid-acrylamide copolymer, and an acrylamide-acrylic acid-N-hydroxyethylacrylamide terpolymer). As the water-soluble polymer, one type thereof may be used solely, and two or more types thereof may also be used in combination. Further, the water-soluble polymer can be used in any state of an unneutralized state or a neutralized state. Among these, carboxymethyl cellulose and a copolymer containing an acrylamide monomer unit and an acrylic acid monomer unit are preferable.

Here, the second binding material preferably contains a water-soluble polymer having a weight-average molecular weight Mw of 500,000 or more, more preferably contains a water-soluble polymer having a weight-average molecular weight Mw of 800,000 or more, preferably contains a water-soluble polymer having a weight-average molecular weight Mw of 10,000,000 or less, and more preferably contains a water-soluble polymer having a weight-average molecular weight Mw of 8,000,000 or less. When the second binding material contains the water-soluble polymer in which the weight-average molecular weight is equal to or more than the aforementioned lower limit, the dispersion stability of a slurry when the composite particles are produced by a spray drying method can be improved. When the second binding material contains the water-soluble polymer in which the weight-average molecular weight is equal to or less than the aforementioned upper limit, the solid content concentration of a slurry when the composite particles are produced by a spray drying method can be improved. Thus, the productivity can be improved.

It is preferable that the second binding material contains a water-insoluble polymer containing an acid group-containing monomer unit such as an ethylenically unsaturated carboxylic acid monomer unit, an aromatic vinyl monomer unit, and a diene-based monomer unit.

Examples of an acid group-containing monomer capable of forming the acid group-containing monomer unit that may be contained in the water-insoluble polymer as the binding material may include those exemplified as the acid group-containing monomer capable of forming the acid group-containing monomer unit that may be contained in the polymer (1) constituting the intermediate portions.

In the water-insoluble polymer as the binding material, when the total monomer units contained in the water-insoluble polymer are defined as 100 parts by weight, the containing amount of the acid group-containing monomer unit is preferably 0.1 part by weight or more, more preferably 0.5 part by weight or more, and still more preferably 1 part by weight or more, and is preferably 30 parts by weight or less, more preferably 25 parts by weight or less, and still more preferably 20 parts by weight or less. When the containing ratio of the acid group-containing monomer unit in the water-insoluble polymer as the binding material is equal to or more than the aforementioned lower limit value, the stability of the slurry viscosity with time when the composite particles are produced by a spray drying method can be improved.

Examples of the aromatic vinyl monomers capable of forming an aromatic vinyl monomer unit may include styrene, α-methylstyrene, p-t-butylstyrene, butoxystyrene, vinyltoluene, chlorostyrene, and vinylnaphthalene. As the aromatic vinyl monomers, one type thereof may be used solely, and two or more types thereof may also be used in combination at any ratio. Among these styrene is preferable.

In the water-insoluble polymer as a binding material, when the total monomer units contained in the water-insoluble polymer are defined as 100 parts by weight, the containing amount of the aromatic vinyl monomer unit is preferably 20 parts by weight or more, more preferably 25 parts by weight or more, and still more preferably 30 parts by weight or more, and is preferably 90 parts by weight or less, more preferably 80 parts by weight or less, and still more preferably 70 parts by weight or less. When the containing ratio of the aromatic vinyl monomer unit in the water-insoluble polymer as a binding material is equal to or more than the aforementioned lower limit value, the stability in preparation of the slurry in producing the composite particles by the spray drying method can be improved. As a result, this can make it difficult for the slurry viscosity to increase. On the other hand, when the containing ratio of the aromatic vinyl monomer unit in the water-insoluble polymer as a binding material is equal to or less than the aforementioned upper limit value, the swelling degree of the water-insoluble polymer with respect to the electrolytic solution used for a lithium ion secondary battery can be set in a more suitable range.

Examples of the diene-based monomer capable of forming a diene-based monomer unit may include an aliphatic conjugated diene monomer. Examples of the aliphatic conjugated diene monomer may include 1,3-butadiene, isoprene, 2,3-dimethyl-1,3-butadiene, 1,3-pentadiene, 1,3-hexadiene, chloroprene, and cyanobutadiene. As the aforementioned diene-based monomers, one type thereof may be solely used, and two or more types thereof may also be used in combination at any ratio. Among these, 1,3-butadiene and isoprene are preferable, and 1,3-butadiene is more preferable because they are readily available.

In the water-insoluble polymer as a binding material, when the total monomer units contained in the water-insoluble polymer are defined as 100 parts by weight, the containing amount of the diene-based monomer unit is preferably 20 parts by weight or more, more preferably 25 parts by weight or more, and still more preferably 30 parts by weight or more, and is preferably 85 parts by weight or less, more preferably 80 parts by weight or less, and more preferably 70 parts by weight or less. When the containing ratio of the diene-based monomer unit in the water-insoluble polymer as a binding material is equal to or more than the aforementioned lower limit value, the bonding strength of the electrode can be increased. On the other hand, when the containing ratio of the diene-based monomer unit in the water-insoluble polymer as a binding material is equal to or less than the aforementioned upper limit value, the mechanical stability in preparation of the slurry in producing the composite particles by the spray drying method can be improved.

The water-insoluble polymer may contain an optional monomer unit other than the aforementioned monomer units.

The monomer capable of forming another optional monomer unit constituting the water-insoluble polymer is not particularly limited, and examples thereof may include a monomer copolymerizable with a diene-based monomer. Specific examples thereof may include a hydroxy group-containing monomer unit and a monomer having an unsaturated bond between carbon atoms other than the above-mentioned acid group-containing monomer and aromatic vinyl monomer unit. Examples of such a monomer having an unsaturated bond between carbon atoms may include a cyano group-containing vinyl monomer, an amino group-containing vinyl monomer, a pyridyl group-containing vinyl monomer, and an alkoxyl group-containing vinyl monomer. As the aforementioned monomers copolymerizable with a diene-based monomer, one type thereof may be solely used, and two or more types thereof may also be used in combination at any ratio.

Examples of the hydroxy group-containing monomer capable of forming a hydroxy group-containing monomer unit may include the examples of the hydroxy group-containing monomer capable of forming a hydroxy group-containing monomer unit that may be contained in the aforementioned polymer (1).

The second binding material may contain an optional component in addition to the aforementioned polymer (2). Examples of the optional components may include those similar to the examples of optional components that may be contained in the aforementioned first binding material.

The containing amount of the second binding material in the mixture layer is preferably 0.3% by weight or more, more preferably 0.5% by weight or more, and still more preferably 1.0% by weight or more, and is preferably 20% by weight or less, more preferably 15% by weight or less, and still more preferably 10% by weight or less, relative to the weight of the mixture layer that is defined as 100% by weight.

The mixture layer may contain an optional component in addition to the graphite and the second binding material described above. Examples of the optional component may include a dispersant and an electroconductive material.

Examples of the electroconductive material that may be contained in the mixture layer may include carbon black, carbon nanotubes, vapor grown carbon fibers (VGCF (registered trademark), graphene, and expanded graphite (excluding the graphite described above). Carbon black is an aggregate in which several layers of graphitic carbon crystallites are assembled to form a turbostratic structure, and specific examples thereof may include acetylene black, ketjen black, furnace black, channel black, and thermal lamp black. Among the carbon blacks, acetylene black, furnace black, and ketjen black are particularly preferable from the viewpoint of reducing resistance.

The mixture layer may contain no dispersant or may contain a dispersant. As the dispersant, one type thereof may be solely used, and two or more types thereof may also be used in combination.

The mixture layer may contain no electroconductive material or may contain an electroconductive material. As the electroconductive material, one type thereof may be solely used, and two or more types thereof may also be used in combination.

The containing amount of the electroconductive material in the mixture layer is preferably 10% by weight or less, more preferably 5% by weight or less, and still more preferably 3% by weight or less, and is usually 0% by weight or more, and may be 0% by weight, and is preferably 0.01% by weight or more, more preferably 0.03% by weight or more, still more preferably 0.3% by weight or more, and further preferably 0.5% by weight or more, relative to the weight of the mixture layer which is defined as 100% by weight.

The weight (basis weight) of the mixture layer per unit area is preferably larger from the viewpoint of energy density. On the other hand, if the basis weight is excessively large, the input/output characteristics tend to deteriorate.

Generally, a basis weight of a positive electrode is determined by the internal volume of a battery, the opposing area of a positive electrode and a negative electrode in a battery, the capacity to be provided to a battery, and a capacity per unit weight of an active material contained in a mixture layer. The basis weight of the negative electrode is preferably set to a value equal to or greater than the capacity to accept the designed lithium ion amount supplied from the opposing positive electrode.

Herein, a weight per unit area of a mixture layer (basis weight) means a basis weight of a single mixture layer. In a case where the electrode includes two mixture layers formed on both sides of the current collector of the electrode, the basis weight means that of one mixture layer formed on one side of the current collector.

The electrode of the present embodiment can realize excellent rapid charging characteristics in a lithium ion secondary battery even when the basis weight of the mixture layer is large. As described above, the electrode of the present embodiment is produced by forming a mixture layer on a current collector using, for example, composite particles and pressing the layer, and it is presumed that the tortuous path length from the surface layer of the electrode to the depth of the electrode in the vicinity of the current collector is shorter than that of a conventional electrode produced by applying a liquid composition containing graphite, a binding material, and a solvent onto a current collector, and drying and pressing. This is because the degree of orientation of graphite in the mixture layer is low. As a result, it is presumed that the uniformity of the charging reaction from the surface layer of the electrode to the depth of the electrode in the vicinity of the current collector is enhanced, and that the appropriate size of the intermediate portions present on the current collector and the appropriate distance between the peripheral edges of the adjacent intermediate portions are contributable.

The electrode for a lithium ion secondary battery of the present embodiment can be produced by an optional method. From the viewpoint of effectively improving the rapid charging characteristic, the electrode for a lithium ion secondary battery of the present embodiment is preferably produced by a production method according to Embodiment P1 described later.

<2. Lithium ion secondary battery>

<2.1. Summary of lithium ion secondary battery>

A lithium ion secondary battery according to an embodiment of the present invention includes the electrode according to the above-described embodiment. Generally, such a lithium ion secondary battery includes a positive electrode, a negative electrode, and a non-aqueous electrolytic solution, and includes the electrode according to the above-described embodiment as at least one of the positive electrode and the negative electrode described above. Preferably, in the lithium ion secondary battery, the electrode according to the above-described embodiment is used as the negative electrode. Hereinafter, a lithium ion secondary battery in which the negative electrode is the electrode according to the above-described embodiment will be described as an example.

<2.2. Embodiment B1 of lithium ion secondary battery>

A lithium ion secondary battery according to Embodiment B1 includes the electrode according to Embodiment A1 described above as the negative electrode. Since the negative electrode is the same as the electrode according to Embodiment A1, a description thereof will be omitted.

The positive electrode included in the lithium ion secondary battery according to Embodiment B1 includes a current collector and a mixture layer (positive electrode mixture layer) including a positive electrode active material and a binding material. Examples of the positive electrode active material will be described later.

Examples of the current collector included in the positive electrode may include the examples described above in the embodiment of the electrode.

The binding material contained in the positive electrode mixture layer usually includes a polymer. As the polymer that may be contained in the binding material, one or more polymers selected from the group consisting of the aforementioned polymer (1) and polymer (2) may be used. For example, the positive electrode mixture layer may contain a (meth)acryl-based polymer (acrylate-based polymer), a conjugated diene-based polymer and/or a fluorine-based polymer, and preferably contains a meth(acryl)-based polymer (acrylate-based polymer) and/or a fluorine-based polymer.

The (meth)acryl-based polymer (acrylate-based polymer) is a polymer containing a (meth)acrylic acid ester monomer unit.

The conjugated diene-based polymer is a polymer containing a conjugated diene-based monomer unit. The conjugated diene-based monomer unit represents a monomer unit having a structure formed by polymerizing a conjugated diene or a monomer unit having a structure formed by hydrogenating the foregoing monomer unit having a structure formed by polymerizing a conjugated diene.

The fluorine-based polymer is a polymer containing a fluorine atom-containing monomer unit. Specific examples of the fluorine-based polymer may include polytetrafluoroethylene, polyvinylidene fluoride (PVDF), a tetrafluoroethylene-perfluoroalkyl vinyl ether copolymer, an ethylene-tetrafluoroethylene copolymer, an ethylene/chlorotrifluoroethylene copolymer, and a perfluoroethylene-propene copolymer.

The positive electrode may be produced by an optional method. For example, the positive electrode may be produced by a method comprising applying a slurry including a positive electrode active material, a binding material, and other optional components onto a current collector to form a layer, then drying the layer, and pressing the resulting layer.

As the non-aqueous electrolytic solution, for example, an electrolytic solution in which a supporting electrolyte is dissolved in a non-aqueous solvent can be used. A lithium salt is preferable as the supporting electrolyte. Examples of the lithium salt may include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Among these, $LiPF_6$, $LiClO_4$, and $CF_3SO_3Li$, which are soluble in a solvent and exhibit a high degree of dissociation, are preferable. As the supporting electrolytes, one type thereof may be solely used, and two or more types thereof may also be used in combination.

In general, the higher the degree of dissociation of the supporting electrolyte used, the higher the ionic conductivity tends to be.

The concentration of the supporting electrolyte is preferably set in a range of 0.5 mol/liter to 2.5 mol/liter depending on the type of supporting electrolyte. When the concentration falls within this range, the ionic conductivity can be increased, thereby improving the charging characteristics and the discharging characteristics of the lithium ion secondary battery.

The non-aqueous solvent used for the non-aqueous electrolytic solution is not particularly limited as long as it can dissolve the supporting electrolyte. Examples of the non-aqueous solvent may include a carbonate solvent such as dimethyl carbonate (DMC), ethylene carbonate (EC), diethyl carbonate (DEC), propylene carbonate (PC), butylene carbonate (BC), and methyl ethyl carbonate (MEC); an ester solvent such as γ-butyrolactone and methyl formate; an ether solvent such as 1,2-dimethoxyethane and tetrahydrofuran; a sulfur-containing compound solvent such as sulfolane and dimethyl sulfoxide; and an ionic liquid used as a supporting electrolyte. Among these, a carbonate solvent is preferable because of its high dielectric constant and wide stable potential range. As the non-aqueous solvents, one type thereof may be solely used, and two or more types thereof may also be used in combination. Generally, the lower the viscosity of the non-aqueous solvent, the higher the ionic conductivity. Further, the higher the dielectric constant, the higher the solubility of the supporting electrolyte. However, since there is a trade-off relationship between the two, it is preferable to use the non-aqueous solvent while adjusting the ionic conductivity by the type of solvent and the mixing ratio. A non-aqueous solvent in which all or part of hydrogen is substituted with fluorine may be used either in combination with other non-aqueous solvents or as the sole non-aqueous solvent.

The non-aqueous electrolytic solution may contain an optional additive in combination with the supporting electrolyte and the non-aqueous solvent. Examples of the optional additives may include a carbonate-based compound such as vinylene carbonate (VC); a sulfur-containing compound such as ethylene sulfite (ES); and a fluorine-containing compound such as fluoroethylene carbonate (FEC). As the additives, one type thereof may be solely used, and two or more types thereof may also be used in combination.

The lithium ion secondary battery may further include a separator. Examples of the separators may include a microporous film or a nonwoven fabric formed of a resin such as a polyolefin resin, an aromatic polyamide resin, and the like; and a porous resin coat film containing inorganic ceramic powder. Specific examples of the separators may include a microporous film formed from a resin such as a polyolefin-based polymer (e.g., polyethylene, polypropylene, polybutene, polyvinyl chloride) and mixtures or copolymers thereof; a microporous film formed from a resin such as polyethylene terephthalate, polycycloolefin, polyethersulfone, polyamide, polyimide, polyimideamide, polyaramid, nylon, and polytetrafluoroethylene; fabrics woven from polyolefin-based resin fibers or nonwoven fabrics of such fibers; and an aggregate of insulating material particles. Among these, a microporous film formed from a polyolefin-based resin is preferable from the viewpoint of reducing the film thickness of the entire separator and increasing the active material ratio in the lithium ion secondary battery to improve the capacity per volume.

The separator may include a functional layer such as a heat-resistant layer and an adhesion layer. For example, when the separator includes an adhesion layer, adhesion properties can be imparted to the separator, so that the lithium ion secondary battery can be produced more efficiently. Further, for example, when the separator includes a heat-resistant layer, heat resistance can be imparted to the separator, so that the heat resistance of the lithium ion secondary battery can be enhanced. The functional layer that the separator may include may be a layer having two or more functions, for example, a layer having both heat resistance and adhesion properties.

The thickness of the separator is preferably 1.0 μm or more, and more preferably 3 μm or more, and is preferably 40 μm or less, more preferably 30 μm or less, and still more preferably 25 μm or less, from the viewpoint of reducing the internal resistance of the separator in the lithium ion secondary battery and improving the workability in producing the lithium ion secondary battery.

Examples of the method for producing a lithium ion secondary battery may include a method including overlapping a positive electrode and a negative electrode with each other via a separator, winding or folding these components according to the shape of the battery, placing these components in a battery container, injecting an electrolytic solution into the battery container, and sealing the battery container. Further, as necessary, an expanded metal; an overcurrent preventing element such as a fuse, a PTC element, or the like; a lead plate and the like may be provided to prevent a pressure rise and an overcharging/discharging in the battery. The lithium ion secondary battery may have any shape, such as a coin type, a button type, a sheet type, a cylindrical type, a prismatic type, a flat type, and the like. The material of the battery container is preferably one that inhibits the penetration of moisture into the battery, and examples of the materials may include a metal and a laminate such as aluminum.

<Characteristics of lithium ion secondary battery>

The lithium ion secondary battery including the electrode according to the embodiment described above has excellent rapid charging characteristics and cycle characteristics.

(Rapid charging characteristics: Charge rate)

The rapid charging characteristics of the lithium ion secondary battery may be evaluated by the percentage (charge rate) Rc of a battery capacity after a 0.25-hour rate charge of the lithium ion secondary battery when the battery capacity before charging is defined as 100%. Specifically, Rc may be determined by the following method.
A lithium ion secondary battery after the capacity (C0) is achieved by a 10-hour rate discharge in measurement of capacity after initial formation is allowed to stand at a temperature of 25°C and a lower limit cell voltage for 1 hour, and then charged to a cell voltage of 4.2 V at a 4.0 C rate, that is, by a 0.25-hour rate constant current method. The lithium ion secondary battery is allowed to stand for 30 minutes, and then discharged to the lower limit cell voltage at a temperature of 25°C at a 0.2 C rate, that is, by a 5-hour rate constant current method. The battery capacity C1 at that time is measured. The charge rate Rc (%) may be determined by expression: Rc = (C1/C0) $\times$ 100.
In an example, higher Rc, which represents the rapid charging characteristics of a lithium ion battery, is preferable.

(Rapid charging characteristics: Rapid charge-discharge cycle characteristics)

The lithium ion secondary battery described above has excellent rapid charge-discharge cycle characteristics. The rapid charge-discharge cycle characteristics of the lithium ion secondary battery can be evaluated, for example, by a cycle capacity retention ratio in a rapid charge-discharge cycle test in which rapid 0.25-hour rate charge and discharge are performed for a plurality of cycles (e.g., 50 cycles). As the cycle capacity retention ratio is higher, the rapid charge cycle characteristics are more excellent.

(Cycle characteristics)

The cycle characteristics of the lithium ion secondary battery can be evaluated as a cycle capacity retention ratio in a cycle test in which 200 cycles of charging and discharging at a temperature of 45°C are performed. In an example, the cycle capacity retention ratio of the lithium ion secondary battery is preferably 80% or more, more preferably 85% or more, and still more preferably 88% or more. The upper limit thereof is ideally 100%, but may be 100% or less. The cycle capacity retention ratio represents a ratio of the "200-cycle discharge capacity" relative to the "first cycle discharge capacity" in the aforementioned cycle test, and may be measured by a method described in the section <Evaluation method" (Cycle characteristics) of Examples to be described later.

(Discharge capacity per unit area)

The discharge capacity per unit area is a ratio of the capacity when a 10-hour rate discharge is performed within a voltage range from the upper limit voltage to the discharge voltage of the battery, relative to the total area of the portion where the positive electrode faces the negative electrode. From the viewpoint of energy density, a higher discharge capacity per unit area is preferable.
The upper limit voltage and the lower limit voltage of a battery vary depending on the positive electrode active material and the negative electrode active material that are used. When the specification of the battery is known, it is preferable that the upper and lower limit voltages of the battery are set according to the specification. Further, when materials to be used are known, it is preferable that the upper and lower limit voltages of the battery are set according to the materials. For example, when the positive electrode active material contains lithium nickel cobalt manganese oxide or lithium cobalt oxide, the upper limit voltage of a general battery cell is usually 4.2 V. When the positive electrode active material is lithium iron phosphate, the upper limit voltage of the battery cell is usually 3.8 V. When two or more types of positive electrode active materials are used, the upper limit voltage of the battery cell is determined according to the material to be operated at a higher voltage. In the case of a novel material, reference to technical documents and the like may be made.

The lower limit voltage varies depending on the positive electrode active material and the negative electrode active material. When lithium nickel cobalt manganese oxide is used as the positive electrode active material and graphite is used as the negative electrode active material, the lower limit voltage of the battery cell is usually 3.00 V. When the positive electrode active material contains lithium iron phosphate, the lower limit voltage of the battery is usually 2.40 V. Further, when graphite and the silicon atom-containing active material are used in combination as the negative electrode active material, it is preferable that the lower limit voltage is set to be lower than the aforementioned voltage value.

When an active material used in the battery is unclear, the type of an active material used can be found from a diffraction pattern based on the crystal structure of the active material by analyzing the battery with a high-energy X ray.

When the lower limit voltage is unclear, it is preferable that from a rated voltage, a current value that is reduced by application to a voltage lower than the rated voltage by 0.1 V over 30 minutes is discovered, discharging is further continued at the current value, a point at which the slope ($\Delta V/\Delta t$) of voltage change relative to time change is 15 times or more the slope of voltage change relative to time change until the voltage is decreased by 0.1 V from the rated voltage is set to the lower limit voltage of the battery.

The upper and lower limit voltages of the battery are determined as described above, and charging and discharging are then performed within the range of the upper and lower limit voltages while changing the current value. Thus, the discharge capacity of the battery at a 10-hour rate can be determined.

When the area of the portion where the positive electrode faces the negative electrode is unclear, the capacity of the battery is determined by a 10-hour rate discharge, and the area can be obtained by measurement of the size of the electrode inside the battery, after disassembly of the battery or using an X-ray CT.

The discharge capacity per unit area (battery capacity) of the portion where the negative electrode and the positive electrode face each other, when the lithium ion secondary battery is discharged at a 10-hour rate, is preferably 3.3 mAh/cm$^2$ or more, more preferably 3.5 mAh/cm$^2$ or more, and still more preferably 4.0 mAh/cm$^2$ or more.

Even when the discharge capacity per unit area is equal to or more than the aforementioned lower limit, the lithium ion secondary battery according to the present embodiment may achieve excellent rapid charging characteristics and cycle characteristics.

For example, when the entirety of the surface of the positive electrode faces part of the surface of the negative electrode, the "area of the portion where the negative electrode and the positive electrode face each other" is equal to the area of the positive electrode, and specifically the area of the positive electrode mixture layer of the positive electrode.

When one (e.g., the negative electrode) of the positive electrode and the negative electrode of the lithium ion secondary battery is an electrode in which the mixture layer (e.g., the negative electrode mixture layer) is formed on each of the surfaces of the current collector, the "area of the portion where the negative electrode and the positive electrode face each other" is a sum (A1 + A2) of an area A1 of a portion where the mixture layer formed on a surface of the current collector faces the mixture layer (e.g., the positive electrode mixture layer) of the other electrode (e.g., the positive electrode), and an area A2 of a portion where the mixture layer formed on another surface of the current collector faces the mixture layer of the other electrode.

<3. Method for producing electrode for lithium ion secondary battery>

<3.1. Embodiment P1>

Hereinafter, a method for producing an electrode for a lithium ion secondary battery according to an embodiment P1 will be described.

An electrode for a lithium ion secondary battery produced by the method of the present embodiment includes: a current collector; a plurality of intermediate portions that are disposed on the current collector in an island shape and contain the first binding material; and a mixture layer that is disposed on the current collector and the plurality of intermediate portions and contains the active material and the second binding material, the average distance between the peripheral edges of the intermediate portions adjacent to each other as viewed in the thickness direction of the electrode is 30 $\mu$m or more and 250 $\mu$m or less, and the area S of each of the intermediate portions is 5,000 $\mu$m$^2$ or more and 150,000 $\mu$m$^2$ or less. The electrode for a lithium ion secondary battery produced by the production method of the present embodiment may be a positive electrode or a negative electrode, and is preferably a negative electrode.

A method for producing an electrode for a lithium ion secondary battery according to an embodiment of the present invention includes:

a step (1) of applying a binding material composition containing the first binding material onto the current collector in an island shape to form a first intermediate in which the intermediate portions are formed;
a step (2) of supplying composite particles containing the active material and the second binding material onto the current collector and the intermediate portions of the first intermediate to form a composite particle layer; and a step (3) of pressing the composite particle layer to form the mixture layer, thereby obtaining the electrode. The steps (1), (2), and (3) are usually performed in this order.

Each of the steps (1), (2), and (3) may be repeated a plurality of times or may not be repeated.

A series of steps including the steps (1), (2), and (3) may be repeated a plurality of times (e.g., twice) or may not be repeated.

According to the production method of the present embodiment, an electrode capable of forming a lithium ion secondary battery having excellent rapid charging characteristics and cycle characteristics may be produced.

Further, the composite particles containing the active material are used to form the mixture layer, and thus energy required in production can be reduced as compared with a production method in which the mixture layer is formed from a slurry containing the active material and a large amount of solvent. Furthermore, successive operation is easy and the yield can be increased.

<Step (1)>

In the step (1), the binding material composition containing the first binding material is applied onto the current collector in an island shape to form the first intermediate in which the intermediate portions are formed. Applying means a method in which a liquid composition is attached to a subject, and as required, dried and/or cured to form a film of the liquid composition on the subject. Further, applying in an island shape means that the binding material composition is partially applied onto the current collector to form a plurality of applied areas discretely spaced apart from each other on the current collector.

Applying the binding material composition onto the current collector can be performed by an optional method. Applying in the step (1) is performed by adjusting a condition so that the intermediate portions in the electrode for a lithium ion secondary battery have a desired distance between peripheral edges and a desired area S.

That is, applying in the step (1) is performed so that in the electrode for a lithium ion secondary battery to be obtained, the average distance between the peripheral edges of the intermediate portions adjacent to each other as viewed in the thickness direction of the electrode is 30 $\mu$m or more and 250 $\mu$m or less, and the area S of each of the intermediate portions is more than 5,000 $\mu$m$^2$ and 150,000 $\mu$m$^2$ or less.

The applying condition may be appropriately adjusted according to an applying method to be used. For example, in the case of applying through a gravure coating method, the distance between the peripheral edges of the intermediate portions may be increased by increasing the interval between concave parts formed on a gravure roll.

The pattern of the intermediate portions on the current collector is not particularly limited as long as the aforementioned relationship is satisfied. The pattern may be random, for example, a pattern in which the intermediate portions are disposed in a zigzag pattern, a pattern in which the intermediate portions are disposed along straight lines parallel to each other, a pattern in which the intermediate portions are disposed at the center and vertices of a hexagonal, or a pattern in which the intermediate portions are disposed at the intersection point of diagonal lines and vertices of a parallelogram (e.g., a pattern in which the intermediate portions are disposed at the center and vertices of a rectangle, and a pattern in which the intermediate portions are disposed at the center and vertices of a square).

When the binding material composition is applied onto the current collector through a gravure coating method and dried to form the intermediate portions, it is preferable that the concave parts formed on a gravure roll have an angle with respect to the width direction of the gravure roll to easily fill the concave parts with the binding material composition and stably apply the binding material composition. The angle of the concave parts with respect to the width direction of the gravure roll is preferably 5° or more and 45° or less.

Examples of the applying method for forming the intermediate portions may include a gravure coating method, an inkjet method, and a flexographic printing method. From the viewpoint of productivity, a gravure coating method and an inkjet method are preferable, and a gravure coating method that enables high-speed application and has excellent application efficiency is more preferable.

The step (1) may be performed, for example, with a binding material composition application device to be described later.

The current collector is preferably long-length. When the current collector is long-length, the intermediate portions may be continuously formed while the current collector is conveyed, and thus the production efficiency of the electrode is excellent. Here, the "long-length" current collector refers to a current collector having a length five times or more the width, preferably refers to a current collector has a length 10 times or more the width, and specifically a current collector having such a length that the current collector is wound into a roll shape for storage or conveyance. The upper limit of the length of the current collector is not particularly limited, and may be, for example, 100,000 times or less the width.

The binding material composition may contain a solvent. Here, the term "solvent" encompasses a dispersion medium in which a solute is dispersed, in addition to a medium in which a solute is dissolved. As the solvent, a conventionally known solvent may be used.

Examples of the solvent that may be contained in the binding material composition may include water and an organic solvent.

Among these, water or a solvent containing water (hereinafter also referred to as aqueous solvent) is preferable since a burden on the environment is low.

The first binding material contained in the binding material composition usually contains a polymer. The polymer that may be contained in the binding material composition may be usually the polymer (1) that may be contained in the aforementioned intermediate portions. The polymer (1) preferably has a particulate shape in which the polymer is dispersed in a liquid binding material composition containing the solvent. When the polymer (1) in the liquid binding material composition containing the solvent has a particulate shape in which the polymer is dispersed, the concentration of the first binding material contained in the binding material composition can be increased. Thus, in the step of forming the intermediate portions on the current collector, the application amount of the binding material composition containing the solvent can be reduced as compared with the application amount of the binding material composition in which the polymer (1) is dissolved in the solvent, and the amount of the solvent to be removed from the application layer can be reduced. Therefore, the area of drying equipment and equipment installation cost can be reduced, the production speed can be improved, and the $CO_2$ emission amount can be reduced. The polymer (1) in a state in which the solvent is removed from the binding material composition has a particulate shape having a grain boundary although the polymer (1) is sometimes deformed. Hereinafter, the polymer (1) that has a particulate shape is also referred to as particulate polymer (1).

The particulate polymer (1) preferably has a median diameter of a specific range. Specifically, the median diameter D50 of the particulate polymer (1) is preferably 100 nm or more, more preferably 110 nm or more, and still more preferably 120 nm or more, and is preferably 1,000 nm or less, more preferably 800 nm or less, and still more preferably 600 nm or less.

The median diameter D50 of the particulate polymer (1) may be measured by a wet method with a laser diffraction/light scattering particle size distribution measuring device. As a specific measurement method, a method described in Examples to be described later (a method for measuring a median diameter D50 of a particulate polymer) may be adopted.

The polymer (1) may be produced by polymerizing a monomer corresponding to a monomer unit that may be contained in the polymer (1) through an optional method such as a solution polymerization method, a suspension polymerization method, a bulk polymerization method, or an emulsion polymerization method.

When the binding material composition contains the polymer (1) as the particulate polymer (1), a polymerization reaction is performed in a solvent in which the polymer (1) is not dissolved or hardly dissolved, to obtain a dispersion liquid of the particulate polymer (1), and a composition containing the obtained dispersion liquid of the particulate polymer (1) and an optional component may be used as the binding material composition.

<Step (2)>

In the step (2), composite particles containing the active material and the second binding material are supplied onto the current collector and the intermediate portions of the first intermediate to form a composite particle layer. The composite particles are usually supplied as a powder. It is preferable that the composite particles are supplied onto the current collector and the intermediate portions by dry application of applying a dried powder.

The powder of the composite particles are usually supplied onto a portion of the current collector where the intermediate portions are not formed, and onto the intermediate portions to form a composite particle layer so as to cover the portion of the current collector where the intermediate portions are not formed, and the intermediate portions.

The composite particles may be supplied onto the first intermediate, for example, with a composite particle supply device to be described later.

(Composite particles)

The composite particles include an active material and a second binding material. As the active material, a material that can function as an active material in an electrode for a lithium ion secondary battery can be used. The active material contained in the composite particle may be either a negative electrode active material or a positive electrode active material. When a negative electrode for a lithium ion secondary battery is produced, composite particles containing a negative electrode active material are used. When a positive electrode is produced, composite particles containing a positive electrode active material are used.

As the positive electrode active material for a lithium ion secondary battery, an active material that can be doped or de-doped with lithium ions is used, and examples thereof may include a positive electrode active material made of an inorganic compound, a positive electrode active material made of an organic compound, and a composite material in which these materials are used in combination.

Examples of the positive electrode active material made of an inorganic compound may include a transition metal oxide, a transition metal sulfide, and a lithium-containing composite metal oxide containing lithium and a transition metal. Examples of the transition metal may include Ti, V, Cr, Mn, Fe, Co, Ni, Cu, and Mo.

Examples of the transition metal oxide may include $MnO$, $MnO_2$, $V_2O_5$, $V_6O_{13}$, $TiO_2$, $Cu_2V_2O_3$, amorphous $V_2OP_2O_5$, and $MoO_3$. Among these, $MnO$, $V_2O_5$, $V_6O_{13}$, and $TiO_2$ are preferable from the viewpoint of cycle stability and capacity.

Examples of the transition metal sulfide may include $TiS_2$, $TiS_3$, amorphous $MoS_2$, and $FeS$.

Examples of the lithium-containing composite metal oxide may include a lithium-containing composite metal oxide having a layered structure, a lithium-containing composite metal oxide having a spinel structure, and a lithium-containing composite metal oxide having an olivine-type structure. Examples of the lithium-containing composite metal oxide having a layered structure may include a lithium-containing cobalt oxide ($LiCoO_2$), a lithium-containing nickel oxide ($LiNiO_2$), a lithium composite oxide of Co-Ni-Mn, a lithium composite oxide of Ni-Mn-Al, and a lithium composite oxide of Ni-Co-Al. Examples of the lithium-containing composite metal oxide having a spinel structure may include lithium manganate ($LiMn_2O_4$), and $Li[Mn_{3/2}M1_{1/2}]O_4$ (here, M1 represents a transition metal other than Mn such as Cr, Fe, Co, Ni, and Cu) in which part of Mn is substituted with another transition metal. Examples of the lithium-containing composite metal oxide having an olivine-type structure may include an olivine-type lithium phosphate compound represented by $Li_xM^2PO_4$ (in the formula, $M^2$ represents at least one element selected from the group consisting of Mn, Fe, Co, Ni, Cu, Mg, Zn, V, Ca, Sr, Ba, Ti, Al, Si, B and Mo, and X represents a number satisfying $0 \leq X \leq 2$).

Examples of the positive electrode active material made of an organic compound may include a conductive macromolecule such as polyacetylene and poly-p-phenylene.

Further, for example, a composite material covered with a carbon material may be produced by reducing and firing an iron-based oxide in the presence of a carbon source material, and this composite material may be used as a positive electrode active material. Although the iron-based oxide tends to have poor electrical conductivity, it can be used as a high-performance positive electrode active material by producing the composite material from the iron-based oxide as described above.

As the positive electrode active materials, one type thereof may be solely used, and two or more types thereof may also be used in combination. Further, a mixture of the inorganic compound and the organic compound described above may be used as a positive electrode active material.

Examples of the negative electrode active material for a lithium ion secondary battery may include graphite and examples similar to those described above as the optional active material that may be contained in the mixture layer. As the negative electrode active materials, one type thereof may be solely used, and two or more types thereof may also be used in combination.

When an electrode for a lithium ion secondary battery including a mixture layer containing graphite in which the aforementioned ratio (I(110)/I(002)) falls within a specific range is obtained, it is preferable to produce the lithium ion secondary battery by a production method including the step (2). As a result, it is possible to obtain an electrode capable of achieving a lithium ion secondary battery excellent in rapid charging characteristics.

When compared with a case where a layer of the active material composition is formed by wet-coating the first intermediate with the active material composition containing a solvent and graphite as the active material and a mixture layer is obtained from the layer of the active material composition, a case where a composite particle layer is formed by a dry process using composite particles containing graphite as the active material as in the step (2) is considered that graphite is less likely to be oriented on the first intermediate. As a result, it is considered that graphite is less likely to be oriented in the mixture layer of the electrode and the ratio of graphite in the mixture layer (I(110)/I(002)) falls within the aforementioned specified range.

Generally, the active material can be particles formed of the above-described material. The active material preferably has a median diameter D50 within a specified range. Specifically, the median diameter D50 of the active material is preferably 0.1 $\mu$m or more and preferably 50 $\mu$m or less.

The median diameter D50 of the active material may be measured by dry method using a laser diffraction /light scattering particle size distribution measuring device.

The amount of the active material relative to 100% by weight of the composite particle is preferably 80% by weight or more, more preferably 85% by weight or more, and still more preferably 90% by weight or more, and is preferably 99% by weight or less, more preferably 98.5% by weight or less, and still more preferably 98% by weight or less. When the amount of the active material falls within the aforementioned range, the rapid charging characteristics and the cycle characteristics of the lithium ion secondary battery can be effectively improved.

The second binding material contained in the composite particle may be a binding material (second binding material) usually contained in a mixture layer. Examples of the second binding material contained in the composite particle may include examples similar to those of the second binding material contained in the mixture layer.

The composite particle can contain a dispersant as an optional component. The second binding material contained in the composite particle may be one that functions as a dispersant. Examples of the dispersants may include a cellulose-based polymer such as carboxymethyl cellulose and methyl cellulose, and ammonium or alkali metal salts of these. As these dispersants, one type thereof may be solely used, and two or more types thereof may also be used in combination.

The composite particles may include an electroconductive material as an optional component. Examples of the electroconductive material may include examples similar to those described above. As these electroconductive materials, one type thereof may be solely used, and two or more types thereof may also be used in combination.

The composite particles may be produced by granulating an active material, a second binding material, and optional components that may be contained as necessary. Examples of methods for producing the composite particles, which are not particularly limited, may include known granulation methods such as a fluidized bed granulation method, a spray drying granulation method, an agitation granulation method, a tumbling granulation method, and a tumbling fluidized bed granulation method.

Each of the composite particles is preferably in the form of a secondary particle formed by aggregating a plurality of primary particles.

Specifically, the composite particles are preferably secondary particles formed by binding a plurality (preferably several to several tens) of active materials and optional components by the second binding material.

The median diameter (D50) of the composite particles is preferably 30 $\mu$m or more, more preferably 50 $\mu$m or more, and still more preferably 60 $\mu$m or more, and is preferably 1000 $\mu$m or less, more preferably 500 $\mu$m or less, and still more preferably 250 $\mu$m or less, from the viewpoint of easily obtaining a mixture layer having a desired thickness.

The median diameter D50 of the composite particles may be measured using a laser diffraction/light scattering particle size distribution measuring device. As a specific measurement method, a method described in (Method for measuring median diameter D50 of composite particles) of Examples, which will be described later, can be adopted.

The step (2) may include a step (2-1) of forming a composite particle layer by leveling the aforementioned composite particles supplied on the aforementioned first intermediate. The step (2-1) may be performed by a squeegee member, which will be described later, for example.

<Step (3)>

In the step (3), the aforementioned composite particle layer is pressed to form the aforementioned mixture layer, obtaining the aforementioned electrode. In the step (3), the composite particle layer may be pressed, for example, with a composite particle layer pressing device to be described later.

<Optional step>

The method for producing an electrode according to the present embodiment may include an optional step in addition to the aforementioned steps.

For example, the production method of the present embodiment may include a step of drying the intermediate portions formed in the first intermediate after the step (1).

For example, the current collector is long-length, and the step (1) may be performed while conveying the long-length current collector. The long-length current collector may be conveyed, for example, with a conveying device to be described later.

For example, the first intermediate is long-length, and the step (2) may be performed while conveying the long-length first intermediate. The long-length first intermediate may be conveyed, for example, with a conveying device to be described later.

<Device for producing electrode>

The method for producing an electrode according to the present embodiment may be performed with an optional production device. For example, the method for producing an electrode may be performed with a production device including a conveying device, a binding material composition application device, a composite particle supply device, a squeegee member, and a composite particle layer pressing device.

The conveying device is configured to convey the current collector, and is, for example, a conveying roll. The binding material composition application device is configured to apply the binding material composition onto the current collector, and is, for example, a gravure application device. The composite particle supply device is configured to supply the composite particles onto the first intermediate, and is, for example, a hopper. The squeegee member is configured to level a layer of the composite particles supplied onto the first intermediate, and is, for example, a member such as a squeegee blade or a roller squeegee. The composite particle layer pressing device is configured to press the composite particle layer, and is, for example, a pair of pressure rolls.

The aforementioned production device may further include elements such as an optional member or device.

Examples

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operations described below were performed under the conditions of normal temperature ($20°C \pm 15°C$) and normal pressure (1 atm), unless otherwise specified.

In the following description, evaluation methods will be first described. Next, materials used in production of the electrode for a lithium ion secondary battery will be described. Next, production of the electrode for a lithium ion secondary battery using the materials will be described. Finally, evaluation results of Examples and Comparative Examples will be described.

<Evaluation methods>

(Glass transition temperature)

An aqueous dispersion liquid containing a polymer was dried under an environment of 50% humidity and 23°C to 25°C for 3 days to obtain a film having a thickness of $1 \pm 0.3$ mm. This film was dried under a vacuum at 120°C for 10 hours. After that, the dried film was used as a sample, and the glass transition temperature (°C) was measured at a measurement temperature of -100°C to 180°C and a rate of temperature increase of 5°C/min with a differential scanning calorimeter ("DSC6220" manufactured by SII NanoTechnology Inc.) in accordance with JIS K7121.

(Method for measuring median diameter D50 of particulate polymer)

The median diameter of a particulate polymer (A) prepared in each of Examples and Comparative Examples was measured by a laser diffraction method. Specifically, an aqueous dispersion liquid of the particulate polymer (A) in which the solid content concentration was adjusted to 0.1% by mass was obtained as a sample. The particle diameter (D50) at which the cumulative frequency calculated from the small-diameter side in a particle diameter distribution (on a volume basis) measured with a laser diffraction type particle diameter distribution measurement device (product name "LS-13 320" manufactured by Beckmann Coulter, Inc.) became 50% was referred to as the median diameter D50 of the particulate polymer (A).

(Method for measuring median diameter D50 of composite particles)

The median diameter D50 of the composite particles was measured with a laser diffraction/scattering type particle size distribution measurement device ("MT3200II" manufactured by MicrotracBEL Corp.).

Specifically, the particle diameter (on a volume basis) was measured by a dry process through a laser diffraction scattering method with the laser diffraction-scattering type particle size distribution measurement device. The pressure of air for dispersion during measurement was set to 0.05 MPa. In the obtained measurement results, the particle diameter at which the cumulative frequency calculated from the small-diameter side became 50% was referred to as a median diameter D50.

(Initial formation and battery capacity)

A lithium ion secondary battery obtained in each of Examples and Comparative Examples was injected with an electrolytic solution and then allowed to stand at a temperature of 25°C for 5 hours. Next, the lithium ion secondary battery was charged to a cell voltage of 3.3 V at a temperature of 25°C and 7 mA by a constant current method, and then subjected to an aging treatment at a temperature of 60°C for 12 hours. Then, the lithium ion secondary battery was charged at a temperature of 25°C and 15 mA by a constant current-constant voltage charge method (upper limit cell voltage: 4.20 V), and discharged to a cell voltage of 3.00 V at 15 mA by a constant current method. Next, the lithium ion secondary battery was charged again to a cell voltage of 4.20 V at a temperature of 25°C and 15 mA by a constant current-constant voltage charge method, allowed to stand for 10 minutes, and discharged again to a cell voltage of 3.00 V at 15 mA by a constant current method. Charging and discharging at 15 mA within a cell voltage range of 4.20 V to 3.00 V were repeated twice, resulting in initial formation. The discharge capacity after charging and discharging were repeated twice was 72 mAh.

The discharge capacity of the battery at that time representing 72 mAh means that a current value when the battery is discharged in 1 hour, that is, a current value at a 1-hour rate (at a 1.0 C rate) was 72 mA. Subsequently, the battery was charged to 4.20 V at 14 mA by a constant current-constant voltage charge method, and then discharged to a cell voltage of 3.00 V at a constant current of 7.2 mA (10-hour rate). At that time, the discharge capacity was 72 mAh (C0). After that, the battery capacity per unit area of a positive electrode (per unit area of a portion where a negative electrode and a positive electrode face each other) was calculated.

(Rapid charging characteristics: charge rate in first cycle of rapid charge)

The lithium ion secondary battery subjected to initial formation as described above was allowed to stand at a temperature of 25°C for 1 hour, and then charged to a cell voltage of 4.20 V at a 4.0 C rate, that is, by a 0.25-hour rate constant current method. The lithium ion secondary battery was allowed to stand for 30 minutes, and then discharged to a cell voltage of 3.00 V at a temperature of 25°C at a 0.2 C rate (5-hour rate) by a constant current method. The discharge capacity (battery capacity) C1 at that time was measured. The charge rate Rc at a 4.0 C rate, that is, a 0.25-hour rate was calculated by the following expression.

$$Rc\ (\%)\ =\ (C1/C0)\ \times\ 100$$

(Cycle characteristics)

A battery cell separate from the battery cell used in the evaluation of rapid charging characteristics was prepared. The battery cell was subjected to initial formation and then discharged at a 10-hour rate. The battery cell was allowed to stand at a temperature of 45°C for 1 hour, and then charged to 4.20 V at a 1.0 C rate by a constant current-constant voltage charge method. The battery cell was allowed to stand for 10 minutes, then discharged to 3.00 V at a temperature of 45°C at a 1.0 C rate by a constant current method, and allowed to stand for 10 minutes. The discharge capacity at that time was referred to as C0(45). The charging and discharging operation was repeated, and the capacity C200(45) after 200 cycles was measured. The capacity retention ratio Rc(45) was calculated by the following expression.

$$Rc(45)\ (\%)\ =\ (C200(45)/C0(45))\ \times\ 100$$

As the capacity retention ratio Rc(45) is higher, the cycle characteristics are more excellent.

(Orientation)

A battery cell separate from the battery cell used in the evaluation of rapid charging characteristics and the battery cell used in the evaluation of cycle characteristics was prepared. The battery cell was subjected to initial formation, then discharged at a 10-hour rate, and disassembled. A negative electrode plate was taken out, repeatedly rinsed with DEC, and air-dried, and the orientation of graphite in a negative electrode mixture layer was evaluated with an X-ray diffraction device. Measurement was performed under the following condition, and the intensity I(110) of a peak based on a (110) plane of graphite appearing near 77.3° and the intensity I(002) of a peak based on a (002) plane of graphite in a c-axis direction appearing near 26.4° were obtained. Then, the ratio I(110)/I(002) was determined and referred to as the indicator of orientation of graphite in the mixture layer of the negative electrode.

Measurement device: X-ray diffraction device "SmartLab" (manufactured by Rigaku Corporation)
Measurement method: concentration method
Target element: Cu
X-ray type: Kα
Incident slit: 1/2
Receiving slit 1: open
Receiving slit 2: 20.1 mm
Scan method: 1D
Primary beam: standard
Incident monochromator: none
Receiving monochromator: none
Tube voltage: 45 kV
Tube current: 200 mA
Measurement angle: 20° to 90°
Step width: 0.02
Scanning speed: 20°/min

(Measurement of distance between peripheral edges of intermediate portions and area S of intermediate portions)

The distance between peripheral edges of intermediate portions were measured using the negative electrode for which orientation was evaluated. A low-adhesive tape was bonded to the surface of the mixture layer of the negative electrode, and peeled to partially remove the mixture layer from the electrode surface. This operation was carefully repeated so as not to break the current collector. Thus, the electrode in which the mixture layer remained only on the intermediate portions on the current collector was obtained. The surface of this sample was observed with a scanning electron microscope-energy-dispersive X-ray spectrometer (SEM-EDX), and the intermediate portions remaining on the current collector were confirmed. The state in which the mixture layer was disposed only on the intermediate portions on the current collector was the same as the state of the intermediate portions disposed after the step of forming intermediate portions in the step of producing an electrode. The intermediate portions were substantially rectangular. Any ten intermediate portions were selected under observation at a magnification of 60 times, the distances between the peripheral edges of intermediate portions disposed around the ten intermediate portions were determined, and the intermediate portions adjacent to each of the ten intermediate portions were specified. Among the distances between the peripheral edges of the intermediate portions adjacent to each of the ten intermediate portions, the shortest distance $D_S$ and the longest distance $D_L$ were determined. The arithmetic average value of the ten resultant distances $D_S$'s was referred to as $D_S(ave)$, and the arithmetic average value of the ten distances $D_L$'s was referred to as $D_L(ave)$.
Further, any ten intermediate portions were selected within the observation range, the areas S1 to S10 of the ten intermediate portions were measured, and the arithmetic average value of the areas S1 to S10 was referred to as the area S of each of the intermediate portions of the electrode.

<Production Example P1: Production of particulate polymer (A)>

70 parts of ion-exchanged water, 0.15 part of a polyoxyethylene lauryl ether ("EMULGEN (registered trademark) 120" manufactured by Kao Corporation) as an emulsifier, and 0.5 part of ammonium persulfate were each supplied to a reaction vessel (A) equipped with a stirrer, a gas phase was replaced with a nitrogen gas, and a temperature was increased to 60°C.
On the other hand, 50 parts of ion-exchanged water, 0.5 part of a polyoxyethylene lauryl ether ("EMULGEN (registered trademark) 120" manufactured by Kao Corporation) as an emulsifier, 65.6 parts of 2-ethylhexyl acrylate (2-EHA) as a (meth)acrylic acid alkyl ester monomer, 30 parts of styrene (ST) as an aromatic monovinyl monomer, 1.2 parts of allyl glycidyl ether (AGE) as an epoxy/N-methylol group-containing crosslinkable monomer, 0.2 part of allyl methacrylate (AMA) as a polyvalent ethylenically unsaturated crosslinkable monomer, and 3 parts of acrylic acid as an ethylenically unsaturated carboxylic acid monomer were mixed in another container to obtain a monomer composition. This monomer composition was continuously added to the aforementioned reaction vessel (A) over 4 hours, performing polymerization. During the addition, a reaction was performed at 70°C. After the completion of the addition, the mixture was further stirred at 80°C for 3 hours to complete the reaction. As a result, an aqueous dispersion liquid containing a particulate polymer (A) was obtained.
When the glass transition temperature of the obtained particulate polymer (A) was measured, only a single glass transition temperature (-28°C) was observed. It was confirmed that the particulate polymer (A) was a random copolymer. Further, the median diameter D50 of the particulate polymer (A) was 160 nm.

<Production Example NE1: Production of composite particles 1 for negative electrode>

(NE1-1) Preparation of slurry composition 1 for negative electrode

To a planetary mixer with a dispersion mixer ("HIVIS DISPER MIX Model 3D-2" manufactured by PRIMIX Corporation), 97.0 parts of artificial graphite as a carbonaceous material, and 0.8 part of 4% aqueous solution of lithium salt (P(AA-Aam)-Li) of acrylic acid-acrylamide copolymer as a water-soluble polymer in terms of solid content were added as negative electrode active materials. Then, ion-exchanged water was added to the mixture to adjust the solid content concentration to 65%, and the mixture was mixed at 25°C for 60 minutes to obtain a mixed liquid.
Ion-exchanged water was added to the aforementioned mixed liquid, and mixed for 3 minutes to dilute the solid content concentration to 60%.
Next, 0.8 part of a dispersion liquid of acetylene black ("DENKA BLACK (registered trademark)", product name "Li-100", manufactured by Denka Company Limited) in terms of DENKA BLACK Li-100 was added. The added dispersion liquid contained 0.1 part of sodium salt of carboxymethyl cellulose that was a water-soluble polymer. Further, ion-exchanged water was added and mixed for 3 minutes to dilute the solid content concentration to 58%. Next, 1.3 parts of 40% aqueous dispersion liquid of a styrene-butadiene-methacrylic acid copolymer as a conjugated diene-based polymer (SBR-based copolymer) that was a water-insoluble polymer in terms of solid content was added. Furthermore, ion-exchanged water was added to adjust the final solid content concentration of the mixed liquid to 50%, and the mixture was further mixed for 10 minutes. After that, the mixed liquid was subjected to defoaming under reduced pressure, to obtain a slurry composition 1 for a negative electrode.

(NE1-2) Preparation of composite particles 1 for negative electrode

The obtained slurry composition 1 for a negative electrode was spray dried with a spray dryer ODB-25 (tower diameter; 2,500 mm) manufactured by Ohkawara Kakohki Co., Ltd., under conditions of a rotation disk type atomizer (diameter: 84 mm), a rotation number of 21,000 rpm, and a hot air temperature (outlet temperature) of 90°C, to prepare composite particles (spray drying step). Next, the resultant composite particles were classified using a sieve having a nominal aperture of 150 $\mu$m (JIS Z8801-1) (classification step) to obtain composite particles 1 for a negative electrode. The median diameter D50 of the composite particles 1 for a negative electrode was 80 $\mu$m.

<Production Example NE2: Production of composite particles 2 for negative electrode>

(NE2-1) Preparation of slurry composition 2 for negative electrode

In (NE1-1) of Production Example NE1, the amount of artificial graphite was changed from 97.0 parts to 93.7 parts, and 3.3 parts of SiO$_x$ that was a silicon atom-containing active material was further added as a negative electrode active material to the planetary mixer.
A slurry composition 2 for a negative electrode was obtained by the same manner as that in the aforementioned (NE1-1) except for the matters described above.

(NE2-2) Preparation of composite particles 2 for negative electrode

In (NE1-2) of Production Example NE1, the slurry composition 2 for a negative electrode was used instead of the slurry composition 1 for a negative electrode.
Composite particles 2 for a negative electrode was obtained by the same manner as that in the aforementioned (NE1-2) except for the matter described above. The median diameter D50 of the composite particles 2 for a negative electrode was 78 $\mu$m.

<Production Example NE3: Production of composite particles 3 for negative electrode>

94.5 parts of artificial graphite that was a carbonaceous material and 3.3 parts of SiO$_x$ that was a silicon atom-containing active material were placed as negative electrode active materials into a stirring granulator ("Eirich Intensive Mixer" manufactured by Nippon Eirich Co., Ltd.), and a mixed liquid of 0.8 part of 4% aqueous solution of lithium salt (P(AA-Aam)-Li) of an acrylic acid-acrylamide copolymer that was a water-soluble polymer in terms of solid content, 0.8 part of a dispersion liquid of acetylene black ("DENKA BLACK (registered trademark) Li-10", manufactured by Denka Company Limited) in terms of DENKA BLACK Li-100 (the added dispersion liquid contained 0.1 part of a sodium salt of carboxymethyl cellulose), and 1.3 parts of 40% aqueous dispersion liquid of a styrene-butadiene-methacrylic acid copolymer as a water-insoluble polymer in terms of solid content was then added. Then, a mixture was stirred at a predetermined rotation number to obtain a precursor of composite particles 3 for a negative electrode.
After that, a moisture content contained in the precursor of the aforementioned composite particles 3 for a negative electrode was dried and removed, and the precursor was classified using a sieve having a nominal aperture of 150 $\mu$m (JIS Z8801-1) (classification step) to obtain composite particles 3 for a negative electrode. The median diameter D50 of the composite particles 3 for a negative electrode was 80 $\mu$m.

<Production Example PE1: Production of positive electrode 1>

(PE1-1) Preparation of slurry composition 1 for positive electrode

96.5 parts of NMC532 (LiNi$_{0.5}$Mn$_{0.3}$Co$_{0.2}$O$_2$) as a positive electrode active material, 2.0 parts of carbon black (product name "Li-100" manufactured by Denka Company Limited) as an electroconductive material in terms of solid content, 0.4 part of a dispersant (product name "BM-720H" manufactured by Zeon Corporation) in terms of solid content, and 1.1 parts of polyvinylidene fluoride (product name "Soelf5130" manufactured by Solvay S.A.) as another component in terms of solid content were placed into a planetary mixer and then mixed. N-methyl-2-pyrrolidone (NMP) was gradually added, and the mixture was stirred and mixed to obtain a slurry composition 1 for a positive electrode. The viscosity of the slurry composition 1 for a positive electrode measured with a B-type viscometer under conditions of 60 rpm (rotor M4) and

$25\pm3°C$ was 3,600 mPa·s.

(PE1-2) Application step

The aforementioned slurry composition 1 for a positive electrode was applied onto an aluminum foil having a thickness of 15 $\mu$m serving as a current collector with a comma coater so that the basis weight of a dried mixture layer was 20.5 mg/cm$^2$, and the slurry composition on the aluminum foil was dried to obtain a positive electrode raw material having a positive electrode mixture layer on the current collector.

After that, the prepared positive electrode raw material was roll pressed under an environment of $25\pm3°C$ from the side of the positive electrode mixture layer to obtain a positive electrode 1 having a positive electrode mixture layer density of 3.40 g/cm$^3$.

<Production Example PE2: Production of positive electrode 2>

In (PE 1 -1) of Production Example PE 1, NMC 811 (LiNi$_{0.8}$Mn$_{0.1}$Co$_{0.1}$O$_2$) was used instead of NMC 532 as a positive electrode active material to obtain a slurry composition 2 for a positive electrode.

In (PE1-2), the slurry composition 2 for a positive electrode was used and applied so that the application amount was 19.5 mg/cm$^2$.

A positive electrode 2 was obtained by the same manner as that in Production Example PE1 except for the matters described above.

<Production Example PE3: Production of positive electrode 3>

In (PE 1 -1) of Production Example PE 1, NMC 811 (LiNi$_{0.8}$Mn$_{0.1}$Co$_{0.1}$O$_2$) was used instead of NMC 532 as a positive electrode active material to obtain a slurry composition 2 for a positive electrode.

In (PE1-2), the slurry composition 2 for a positive electrode was used and applied so that the application amount was 21.4 mg/cm$^2$.

A positive electrode 3 was obtained by the same manner as that in Production Example PE1 except for the matters described above.

<Example 1>

(1-1) Production of negative electrode 1

An electrode production device including a conveying device, a gravure coating and drying device equipped with a gravure roll, a hopper, a roller squeegee, and a pair of pressure rolls was prepared. Further, water was added to the aqueous dispersion liquid containing the aforementioned particulate polymer (A) to adjust the concentration, thereby preparing a liquid binding material composition.

While a long-length negative electrode current collector (using a copper foil having a thickness of 10 $\mu$m) was conveyed in the conveying device, the binding material composition was applied onto a surface of the negative electrode current collector in an island pattern and dried with a gravure coating and drying device to form a plurality of binding material applied portions (intermediate portions) on the negative electrode current collector. As a result, a first intermediate was obtained (Step (1)). The pattern of concave parts on the circumferential surface of the gravure roll was such a dotted pattern that the intermediate portions were disposed in an island shape on the current collector of the negative electrode, the distance between the peripheral edges of the intermediate portions adjacent to each other was a distance shown in Table 1, and the area S of each of the intermediate portions had a value shown in Table 1.

The binding material applied portions (intermediate portions) formed on the negative electrode current collector were observed with an electron microscope (product name "JSM-7800F" manufactured by JEOL Ltd.). The binding material applied portions (intermediate portions) were substantially rectangular, and were disposed in an island shape, specifically in a dot shape on the current controller. Further, the image observed with the electron microscope was analyzed. The area of the binding material applied portions (intermediate portions) was 5,600 $\mu$m$^2$, and the distance between the peripheral edges of the binding material applied portions disposed in a dot shape in the conveying direction of the negative electrode current collector was 54 $\mu$m (corresponding to $D_S$(ave)) to 62 $\mu$m (corresponding to $D_L$(ave)).

Next, the composite particles 1 for a negative electrode were supplied onto the negative electrode current collector of the obtained first intermediate and the binding material applied portions (intermediate portions) from the hopper, and the supplied powder of the composite particles 1 for a negative electrode was brought into contact with the roller squeegee while rolling, and leveled with the roller squeegee to form a layer of the composite particles 1 for a negative electrode. This operation produced a second intermediate having the layer of the composite particles 1 for a negative electrode on the first intermediate (Step (2)).

Next, the second intermediate was passed through a gap between the circumferential surfaces of the pair of press rolls, and pressed to obtain a first negative electrode raw material (Step (3)). As a result, the layer of the composite particles 1 for a negative electrode of the second intermediate was pressed to obtain a first negative electrode mixture layer. The basis weight of the first negative electrode mixture layer was 12.5 mg/cm$^2$. The first negative electrode raw material includes the negative electrode current collector, the plurality of intermediate portions disposed in an island shape on a surface of the negative electrode current collector, and the first negative electrode mixture layer disposed on a surface of the negative electrode current collector and the intermediate portions.

Further, the same operations as in the step (1), the step (2), and the step (3) described above were repeated to form a plurality of intermediate portions and a second negative electrode mixture layer on another surface of the negative electrode current collector of the first negative electrode raw material. As a result, a second negative electrode raw material was obtained.

The second negative electrode raw material was further compressed using the pressure rolls, thereby producing a negative electrode 1 having a density of 1.65 g/cm$^3$.

(1-2) Production of lithium ion secondary battery

From the negative electrode 1 produced in the foregoing, a negative electrode plate in which the negative electrode mixture layer had a rectangular shape of 4.0 cm by 3.0 cm and an area where the negative electrode mixture layer was not formed was provided as a current collecting tab outside of the end of the negative electrode mixture layer was produced.

This negative electrode plate was dried under a vacuum under conditions of 150°C and 4 hours.

Next, from the positive electrode 1, a positive electrode plate in which the positive electrode mixture layer had a rectangular shape of 3.8 cm by 2.8 cm and an area where the positive electrode mixture layer was not formed was provided as a current collecting tab outside of the end of the positive electrode mixture layer was produced.

As a separator, a separator substrate of a single layer from polypropylene was prepared.

The positive electrode plate was layered on both surfaces of the aforementioned negative electrode plate via the separator so that a surface where the positive electrode mixture layer was formed faced a surface where the negative electrode mixture layer was formed to produce an element. The area of a portion where the negative electrode and the positive electrode faced each other, specifically, the area of a portion where the positive electrode mixture layer of the positive electrode and the negative electrode mixture layer of the negative electrode faced each other was 21.28 cm$^2$.

A terminal with a sealant was welded to each of the current collecting tab of the negative electrode plate and the current collecting tab of the positive electrode plate by ultrasonic welding, the element was disposed within an aluminum packaging material, and the aluminum packaging material was then heat sealed. As a result, a layered laminate type lithium ion secondary battery cell including the aluminum packaging material having three heat sealed sides and an opened side before injection of an electrolytic solution was produced. After that, the aforementioned battery cell was dried under a vacuum under conditions of 60°C and 10 hours, and then filled with a 1.0 M LiPF$_6$ solution (containing as a solvent a mixed solvent of ethylene carbonate (EC) and diethyl carbonate (DEC) at a volume ratio of 3/7 and as an additive 2% by volume (relative to the solvent) of vinylene carbonate) as an electrolytic solution. Further, the opening of the aluminum packaging material was heat sealed under reduced pressure to complete the layered laminate type lithium ion secondary battery (initial charge capacity equivalent to 78 mAh).

The obtained lithium ion secondary battery was subjected to initial formation by the aforementioned method, and evaluated by the aforementioned methods. The discharge capacity of the battery measured at a 10-hour rate discharge was 72 mAh after the initial formation, and the battery capacity per unit area of a portion where a negative electrode and a positive electrode faced each other was 3.3 mAh/cm$^2$.

<Examples 2 to 6>

The gravure roll used in (1-1) of Example 1 was changed to another gravure roll. This gravure roll had on the circumferential surface such a pattern of concave parts that the distance between the peripheral edges of the intermediate portions adjacent to each other and the area S of each of the intermediate portions in the negative electrode of the obtained lithium ion secondary battery had respective values shown in Table 1.

A layered laminate type lithium ion secondary battery was completed by the same manner as that in Example 1 except for the aforementioned matter. The obtained lithium ion secondary battery was subjected to initial formation and evaluated by the methods described above. In each of the lithium ion secondary batteries obtained in Examples 2 to 6, the discharge capacity of the battery after the initial formation, measured at a 10-hour rate discharge, was 72 mAh, and the battery capacity per unit area of a portion where the negative electrode and the positive electrode faced each other was 3.3 mAh.

<Example 7>

(7-1) Production of negative electrode

- In (1-1) of Example 1, the gravure roll was changed to the same gravure roll as that used in Example 2.
- The composite particles 2 for a negative electrode described above were used instead of the composite particles 1 for a negative electrode.
- The basis weight of each of the first negative electrode mixture layer and the second negative electrode mixture layer was changed to 11.5 mg/cm$^2$.

A negative electrode was produced by the same manner as that in (1-1) of Example 1 except for the aforementioned matters.

(7-2) Production of lithium ion secondary battery

In (1-2) of Example 1, the negative electrode produced in the aforementioned (7-1) was used instead of the negative electrode 1, and the aforementioned positive electrode 2 was used instead of the positive electrode 1.

A layered laminate type lithium ion secondary battery was completed by the same manner as that in (1-2) of Example 1 except for the matters described above. The obtained lithium ion secondary battery was subjected to initial formation by the same manner as the method described above except that the lower limit voltage of the cell was changed to 2.50 V, and was evaluated by the same manner as the methods described above. The discharge capacity of the battery after the initial formation, measured at a 10-hour rate discharge, was 77 mAh, and the battery capacity per unit area of a portion where the negative electrode and the positive electrode faced each other was 3.6 mAh/cm$^2$.

<Example 8>

(8-1) Production of negative electrode

- In (1-1) of Example 1, the gravure roll was changed to the same gravure roll as that used in Example 2.
- The composite particles 2 for a negative electrode described above were used instead of the composite particles 1 for a negative electrode.
- The basis weight of each of the first negative electrode mixture layer and the second negative electrode mixture layer was changed to 13 mg/cm$^2$.

A negative electrode was produced by the same manner as that in (1-1) of Example 1 except for the aforementioned matters.

(8-2) Production of lithium ion secondary battery

In (1-2) of Example 1, the negative electrode produced in the aforementioned (8-1) was used instead of the negative electrode 1, and the aforementioned positive electrode 3 was used instead of the positive electrode 1.

A layered laminate type lithium ion secondary battery was completed by the same manner as that in (1-2) of Example 1 except for the matters described above. The obtained lithium ion secondary battery was subjected to initial formation by the same manner as the method described above except that the lower limit voltage of the battery was changed to 2.50 V, and was evaluated by the same manner as the methods described above. The discharge capacity of the battery after the initial formation, measured at a 10-hour rate discharge, was 86 mAh, and the battery capacity per unit area of a portion where the negative electrode and the positive electrode faced each other was 4.0 mAh/cm$^2$.

<Example 9>

(9-1) Production of negative electrode

- In (1-1) of Example 1, the gravure roll was changed to the same gravure roll as that used in Example 2.
- The aforementioned composite particles 3 for a negative electrode described above were used instead of the composite particles 1 for a negative electrode.
- The basis weight of each of the first negative electrode mixture layer and the second negative electrode mixture layer was changed to 11.5 mg/cm$^2$.

A negative electrode was produced by the same manner as that in (1-1) of Example 1 except for the aforementioned matters.

(9-2) Production of lithium ion secondary battery

In (1-2) of Example 1, the negative electrode produced in the aforementioned (9-1) was used instead of the negative electrode 1.

A layered laminate type lithium ion secondary battery was completed by the same manner as that in (1-2) of Example 1 except for the matters described above. The obtained lithium ion secondary battery was subjected to initial formation and evaluated by the methods described above. The discharge capacity of the battery after the initial formation, measured at a 10-hour rate discharge, was 78 mAh, and the battery capacity per unit area of a portion where the negative electrode and the positive electrode faced each other was 3.6 mAh/cm$^2$.

<Comparative Examples 1 to 4>

The gravure roll used in (1-1) of Example 1 was changed to another gravure roll. This gravure roll had on the circumferential surface such a pattern of concave parts that the distance between the peripheral edges of the intermediate portions adjacent to each other and the area S of each of the intermediate portions in the negative electrode of the obtained lithium ion secondary battery had respective values shown in Table 3.

Layered laminate type lithium ion secondary batteries were completed by the same manner as that in Example 1 except for the aforementioned matter. The obtained lithium ion secondary battery was subjected to initial formation and evaluated by the methods described above. In the lithium ion secondary battery obtained in each of Comparative Examples 1 to 4, the discharge capacity of the battery after the initial formation, measured at a 10-hour rate discharge, was 72 mAh, and the battery capacity per unit area of a portion where a negative electrode and a positive electrode faced each other was 3.3 mAh.

<Comparative Example 5>

The gravure roll used in (1-1) of Example 1 was changed to another gravure roll. This gravure roll had on the circumferential surface such a pattern of concave parts that a plurality of band-shaped intermediate portions extending in a direction of 45° with respect to the conveying direction of a negative electrode current collector and a portion having no band-shaped intermediate portion extending in the direction of 45° with respect to the conveying direction of the negative electrode current collector were alternately formed on the negative electrode current collector. This gravure roll had such a pattern of concave parts that the distance between the edges of the band-shaped intermediate portions adjacent to each other in the negative electrode of the obtained lithium ion secondary battery had a value shown in Table 3.

The intermediate portions formed by the gravure roll has a band shape, and thus the intermediate portions are not disposed discretely from each other, that is, not disposed in an island shape.

A negative electrode was obtained by the same manner as that in (1-1) of Example 1 except for the aforementioned matters.

The same operation as that in (1-2) was performed using the obtained negative electrode to obtain a lithium ion secondary battery. Thus, a layered laminate type lithium ion secondary battery was completed. The obtained lithium ion secondary battery was subjected to initial formation and evaluated by the aforementioned methods.

In the lithium ion secondary battery obtained in Comparative Example 5, the discharge capacity of the battery after the initial formation, measured at a 10-hour rate discharge, was 72 mAh, and the battery capacity per unit area of a portion where a negative electrode and a positive electrode faced each other was 3.3 mAh.

<Comparative Example 6>

(C6-1) Production of negative electrode

An electrode production device including a conveying device, a gravure coating and drying device equipped with a gravure roll, a comma type application device for applying a binding material composition, and a drying device was prepared.

Further, water was added to the aqueous dispersion liquid containing the aforementioned particulate polymer (A) to adjust the concentration, thereby preparing a liquid binding material composition.

While a long-length negative electrode current collector (using a copper foil having a thickness of 10 $\mu$m) was conveyed in the conveying device, the binding material composition was applied onto a surface of the negative electrode current collector in an island pattern and dried with a gravure coating device to form a plurality of binding material applied portions (intermediate portions) on the negative electrode current collector. As a result, a first intermediate was obtained (Step (C1)). The pattern of concave parts on the circumferential surface of the gravure roll was such a dotted pattern that the intermediate portions were disposed in an island shape on the current collector of the negative electrode, the distance between the peripheral edges of the intermediate portions adjacent to each other was a distance shown in Table 4, and the area S of each of the intermediate portions had a value shown in Table 4.

The slurry composition 1 for a negative electrode was applied onto a surface where the intermediate portions were formed so that the basis weight after drying was 12.5 mg/cm$^2$, and dried to form the intermediate portions and a negative electrode mixture layer on a surface of the current collector (Step (C2)). Next, the intermediate portions and a mixture layer were formed on another surface of the current collector by the same manner as that described above, to produce a negative electrode raw material having the intermediate portions and the mixture layer on both the surfaces of the current collector. The obtained negative electrode raw material was compressed using pressure rolls, thereby producing a negative electrode having a density of 1.65 g/cm$^3$.

(C6-2) Production of lithium ion secondary battery

A layered laminate type lithium ion secondary battery was completed by the same manner as that in (1-2) of Example 1 using the obtained negative electrode instead of the negative electrode 1. The produced lithium ion secondary battery was subjected to initial formation and evaluated by the aforementioned methods.

In the obtained lithium ion secondary battery, the discharge capacity of the battery after the initial formation, measured at a 10-hour rate discharge, was 72 mAh, and the battery capacity per unit area of a portion where a negative electrode and a positive electrode faced each other was 3.3 mAh.

<Comparative Example 7>

The gravure roll used in (C6-1) of Comparative Example 6 was changed to another gravure roll. This gravure roll had on the circumferential surface such a pattern of concave parts that the distance between the peripheral edges of the intermediate portions adjacent to each other and the area S of each of the intermediate portions in the negative electrode of the obtained lithium ion secondary battery had respective values shown in Table 4.

The application amount of the negative electrode slurry composition 1 was adjusted so that the density of the negative electrode was 1.50 g/cm$^2$.

A layered laminate type lithium ion secondary battery was completed by the same manner as that in Comparative Example 6 except for the aforementioned matters. The obtained lithium ion secondary battery was subjected to initial formation and evaluated by the methods described above.

In the obtained lithium ion secondary battery, the discharge capacity of the battery after the initial formation, measured at a 10-hour rate discharge, was 72 mAh, and the battery capacity per unit area of a portion where the negative electrode and the positive electrode faced each other was 3.3 mAh.

<Comparative Example 8>

The gravure roll used in (C6-1) of Comparative Example 6 was changed to another gravure roll. This gravure roll had on the circumferential surface such a pattern of concave parts that the distance between the peripheral edges of the intermediate portions adjacent to each other and the area S of each of the intermediate portions in the negative electrode of the obtained lithium ion secondary battery had respective values shown in Table 4.

The negative electrode slurry composition 1 was replaced with the negative electrode slurry composition 2 and the basis weight per one surface was changed to 11.5 mg/cm$^2$. A layered laminate type lithium ion secondary battery was completed by the same manner as that in Comparative Example 6 except for the aforementioned matters. The obtained lithium ion secondary battery was subjected to initial formation by the same manner as the method described above except that the lower limit voltage of the battery was changed to 2.50 V, and was evaluated by the same manner as the methods described above.

In the obtained lithium ion secondary battery, the discharge capacity of the battery after the initial formation, measured at a 10-hour rate discharge, was 78 mAh, and the battery capacity per unit area of a portion where the negative electrode and the positive electrode faced each other was 3.6 mAh.

<Evaluation results>

The evaluation results are shown in the following tables.

Abbreviations in Tables represent the following means.

"Area capacity": battery capacity per unit area of a portion where a negative electrode and a positive electrode face each other (discharge capacity)

"Rapid charging characteristics: charge rate": charge rate Rc in first cycle of rapid charging

"Cycle characteristics": capacity retention ratio

"Dry process": Production method including the step (2)

"Wet process": Production method including the step (C2)

Table 1

Table 1

|  | Ex.1 | Ex.2 | Ex.3 | Ex.4 | Ex.5 | Ex.6 |
|---|---|---|---|---|---|---|
| Producing method | Dry process | Dry process | Dry process | Dry process | Dry process | Dry process |
| Area S of intermediate portions ($\mu m^2$) | 5,600 | 29,646 | 145,247 | 16,060 | 51,120 | 90,200 |
| Distance between peripheral edges $D_S$(ave) - $D_L$(ave) ($\mu m$) | 55 - 62 | 78 - 85 | 147 - 152 | 42 - 43 | 80 - 128 | 131 - 183 |
| Area capacity(mAh/cm$^2$) | 3.3 | 3.3 | 3.3 | 3.3 | 3.3 | 3.3 |
| Rapid charging characteristic: Charge rate | 45% | 46% | 39% | 42% | 45% | 42% |
| Cycle characteristics | 85% | 91% | 83% | 80% | 87% | 81% |
| Active material | Graphite | Graphite | Graphite | Graphite | Graphite | Graphite |
| I(110)/I(002) | 0.0072 | 0.0074 | 0.0073 | 0.0074 | 0.0075 | 0.0074 |

Table 2

Table 2

|  | Ex.7 | Ex.8 | Ex.9 |
|---|---|---|---|
| Producing method | Dry process | Dry process | Dry process |
| Area S of intermediate portions ($\mu m^2$) | 29,646 | 28,845 | 28,228 |
| Distance between peripheral edges $D_S$(ave) - $D_L$(ave) ($\mu m$) | 77 - 85 | 78 - 88 | 76 - 86 |
| Area capacity(mAh/cm$^2$) | 3.6 | 4.0 | 3.6 |
| Rapid charging characteristic: Charge rate | 43% | 40% | 38% |
| Cycle characteristics | 89% | 86% | 88% |
| Active material | Graphite+SiOx | Graphite+SiOx | Graphite+SiOx |
| I(110)/I(002) | 0.0071 | 0.0069 | 0.0062 |

Table 3

Table 3

|  | Compar. Ex.1 | Compar. Ex.2 | Compar. Ex.3 | Compar. Ex.4 | Compar. Ex.5 |
|---|---|---|---|---|---|
| Producing method | Dry process | Dry process | Dry process | Dry process | Dry process |
| Area S of intermediate portions($\mu m^2$) | 3,654 | 189,000 | 5,913 | 19,344 | - |
| Distance between peripheral edges $D_S$(ave) - $D_L$(ave) ($\mu$m) | 100 - 121 | 128 - 140 | 20 - 28 | 255 - 281 | 122 |
| Area capacity(mAh/cm$^2$) | 3.3 | 3.3 | 3.3 | 3.3 | 3.3 |
| Rapid charging characteristic: Charge rate | 6% | 28% | 35% | 4% | 33% |
| Cycle characteristics | <60%[*1] | 76% | 64% | <60%[*1] | 81% |
| Active material | Graphite | Graphite | Graphite | Graphite | Graphite |
| I(110)/I(002) | 0.0073 | 0.0072 | 0.0072 | 0.0071 | 0.0073 |

Table 3 note *1: The capacity retention ratio was less than 60% before 200 cycles, and thus evaluation was cancelled at that time.

Table 4

Table 4

|  | Compar. Ex.6 | Compar. Ex.7 | Compar. Ex.8 |
|---|---|---|---|
| Producing method | Wet process | Wet process | Wet process |
| Area S of intermediate portions($\mu m^2$) | 35,253 | 36,374 | 38,387 |
| Distance between peripheral edges $D_S$(ave) - $D_L$(ave) ($\mu$m) | 60 - 90 | 60 - 90 | 60 - 90 |
| Area capacity(mAh/cm$^2$) | 3.3 | 3.3 | 3.6 |
| Rapid charging characteristic: Charge rate | 25% | 29% | 26% |
| Cycle characteristics | 84% | 85% | 74% |
| Active material | Graphite | Graphite | Graphite+SiOx |
| I(110)/I(002) | 0.0017 | 0.0028 | 0.0017 |

The aforementioned results show the following matters.

In the lithium ion secondary batteries according to Examples 1 to 9, the negative electrodes in which all the average distances $D_S$(ave) and $D_L$(ave) between the peripheral edges of the intermediate portions adjacent to each other are 30 $\mu$m or more and 250 $\mu$m or less, the area S of each of the intermediate portions is 5,000 $\mu m^2$ or more and 150,000 $\mu m^2$ or less, and the ratio I(110)/I(002) is 0.0040 or more are used. Further, the negative electrodes according to Examples 1 to 9 are produced by a production method including a step of supplying the composite particles containing the aforementioned active material and the aforementioned second binding material onto the current collector and the aforementioned intermediate portions of the first intermediate to form a composite particle layer (Step (3)).

In the lithium ion secondary batteries according to Examples 1 to 9, all the rapid charging characteristics (charge rate in the first cycle of rapid charging) is 37% or more, which is satisfactory, and the cycle characteristics (capacity retention ratio) are 80% or more, which is satisfactory.

The negative electrodes used in the lithium ion secondary batteries according to Comparative Examples 1 to 8 do not satisfy at least one of the following conditions (1) to (3):

(1) at least one of the average distances $D_S$(ave) and $D_L$(ave) between the peripheral edges of the intermediate portions adjacent to each other is 30 $\mu$m or more and 250 $\mu$m or less;
(2) the area S of the intermediate portions is 5,000 $\mu$m$^2$ or more and 150,000 $\mu$m$^2$ or less; and
(3) the ratio I(110)/I(002) is 0.0040 or more.

In addition, the electrodes according to Comparative Examples 6 to 8 are not produced by the production method including the step (3) described above.

The lithium ion secondary batteries according to Comparative Examples 1 to 8 cannot achieve both rapid charging characteristics and cycle characteristics, and they are defective.

Explanations of Letters or Numerals

100: electrode
110: current collector
110U: surface
120: intermediate portion
130: mixture layer
M1,M2,M3,M4,M5,M6,M7,M8,M9: intermediate portion
L2,L3,L4,L5,L6,L7,L8,L9: distance

**Claims**

1. An electrode for a lithium ion secondary battery, comprising a current collector, a plurality of intermediate portions that are disposed on the current collector in an island shape and contain a first binding material, and a mixture layer disposed on the current collector and the plurality of intermediate portions, wherein

   an average distance between peripheral edges of the intermediate portions adjacent to each other as viewed in a thickness direction of the electrode is 30 $\mu$m or more and 250 $\mu$m or less, and an area S of each of the intermediate portions is 5,000 $\mu$m$^2$ or more and 150,000 $\mu$m$^2$ or less; and
   the mixture layer contains graphite and a second binding material, and the graphite has a ratio of a peak intensity corresponding to a (110) plane relative to a peak intensity corresponding to a (002) plane in an X-ray diffraction pattern of 0.0040 or more.

2. The electrode for a lithium ion secondary battery according to claim 1, wherein the mixture layer further contains a silicon atom-containing active material.

3. The electrode for a lithium ion secondary battery according to claim 1, being a negative electrode.

4. A lithium ion secondary battery comprising the electrode for a lithium ion secondary battery according to claim 3; and a positive electrode.

5. The lithium ion secondary battery according to claim 4, wherein a discharge capacity per unit area of a portion where the electrode for a lithium ion secondary battery, which is the negative electrode, and the positive electrode face each other, when the lithium ion secondary battery is discharged at a 10-hour rate, is 3.3 mAh/cm$^2$ or more.

6. A method for producing an electrode for a lithium ion secondary battery,

   the electrode including a current collector, a plurality of intermediate portions that are disposed on the current collector in an island shape and contain a first binding material, and a mixture layer disposed on the current collector and the plurality of intermediate portions, the mixture layer containing an active material and a second binding material; an average distance between peripheral edges of the intermediate portions adjacent to each other as viewed in a thickness direction of the electrode is 30 $\mu$m or more and 250 $\mu$m or less, and an area S of each of the intermediate portions is 5,000 $\mu$m$^2$ or more and 150,000 $\mu$m$^2$ or less, and
   the method comprising:

a step (1) of applying a binding material composition containing the first binding material onto the current collector in an island shape to form a first intermediate in which the intermediate portions are formed;
a step (2) of supplying composite particles containing the active material and the second binding material onto the current collector and the intermediate portions of the first intermediate to form a composite particle layer; and
a step (3) of pressing the composite particle layer to form the mixture layer, thereby obtaining the electrode.

# FIG.1

# FIG.2

# FIG.3

## INTERNATIONAL SEARCH REPORT

| International application No. |
|---|
| **PCT/JP2024/033278** |

**A. CLASSIFICATION OF SUBJECT MATTER**

***H01M 4/133***(2010.01)i; ***H01M 4/13***(2010.01)i; ***H01M 4/139***(2010.01)i; ***H01M 4/38***(2006.01)i; ***H01M 4/48***(2010.01)i; ***H01M 4/587***(2010.01)i

FI: H01M4/133; H01M4/13; H01M4/139; H01M4/38 Z; H01M4/48; H01M4/587

According to International Patent Classification (IPC) or to both national classification and IPC

**B. FIELDS SEARCHED**

Minimum documentation searched (classification system followed by classification symbols)

H01M4/133; H01M4/13; H01M4/139; H01M4/38; H01M4/48; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2011/013414 A1 (TOYOTA JIDOSHA KABUSHIKI KAISHA) 03 February 2011 (2011-02-03) | 1-6 |
| A | JP 2012-134068 A (HITACHI CHEM CO., LTD.) 12 July 2012 (2012-07-12) | 1-6 |
| A | JP 2014-041793 A (TOYOTA JIDOSHA KABUSHIKI KAISHA) 06 March 2014 (2014-03-06) | 1-6 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/033278**

| Patent document cited in search report | | | Publication date (day/month/year) | Patent family member(s) | | | Publication date (day/month/year) |
|---|---|---|---|---|---|---|---|
| WO | 2011/013414 | A1 | 03 February 2011 | US | 2012/0135304 | A1 | |
| | | | | EP | 2461396 | A1 | |
| | | | | CN | 102272982 | A | |
| JP | 2012-134068 | A | 12 July 2012 | (Family: none) | | | |
| JP | 2014-041793 | A | 06 March 2014 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016100303 A
- US 2017279114
- JP 2014078497 A
- JP 2015106525 A
- JP 2014199738 A
- JP 2013012393 A
- US 2013004843
- JP 2023082849 A
- US 2023178738
- JP 2001176757 A